# EUROPEAN PATENT APPLICATION

(11) **EP 4 280 300 A1**
(43) Date of publication of application: **22.11.2023**
(21) Application number: 22902476.5
(22) Date of filing: 31.03.2022
(51) Int. Cl.: H01M 4/36, H01M 4/58, H01M 4/136, H01M 4/1397, H01M 10/0525

(54) **POSITIVE ELECTRODE ACTIVE MATERIAL, PREPARATION METHOD THEREFOR, AND POSITIVE ELECTRODE PLATE, SECONDARY BATTERY, AND ELECTRIC DEVICE COMPRISING SAME**

(71) Applicant: Contemporary Amperex Technology Co., Limited, Ningde City, Fujian 352100 (CN)
(72) Inventor: MA, Qingyan, Ningde Fujian 352100 (CN); ZHAO, Yuzhen, Ningde Fujian 352100 (CN); GUAN, Yingjie, Ningde Fujian 352100 (CN); WEN, Yan, Ningde Fujian 352100 (CN); HUANG, Qisen, Ningde Fujian 352100 (CN)
(74) Representative: Laufhütte, Dieter
(86) International application number: PCT/CN2022/084447
(87) International publication number: WO 2023/184355

(57) **Abstract**

In the present application, a positive electrode active material and a preparation method therefor, a positive electrode plate comprising the same, a secondary battery, and a power consuming device are provided. The positive electrode active material has a core-shell structure, which includes an inner core and a shell coating at least part of the inner core, wherein the inner core has a chemical formula of LiₐAₓMn_{1-y}B_{y}P_{1-z}C_{z}O₄₋ₙDₙ, and the coating layer comprises a polymer which includes one or more selected from polysiloxanes with a linear structure and polysiloxanes with a ring structure. The positive electrode active material of the present application enables a secondary battery to have a high energy density as well as significantly improved rate performance, cycling performance and/or high-temperature stability.

## Description

### Technical Field

The present application belongs to the technical field of batteries, and in particular relates to a positive electrode active material and a preparation method therefor, a positive electrode plate comprising the same, a secondary battery, and a power consuming device.

### Background Art

In recent years, secondary batteries have been widely used in energy storage power systems such as hydroelectric, thermal, wind and solar power plants, as well as electric tools, electric bicycles, electric motorcycles, electric vehicles, military equipment, aerospace and other fields. With the application and popularization of secondary batteries, the safety properties thereof have attracted more and more attention. Due to the advantages of a large capacity, high safety and abundant sources of raw materials, lithium manganese phosphate has become one of the positive electrode active materials that currently attract most attention. However, the manganese ions may dissolve during the charging of lithium manganese phosphate, which leads to a rapid decay in terms of capacity. Therefore, it is necessary to provide a positive electrode active material with good comprehensive properties.

### Summary of the Invention

The purpose of the present application is to provide a positive electrode active material and a preparation method therefor, a positive electrode plate comprising the same, a secondary battery, and a power consuming device, which enable the secondary battery to possess a high energy density as well as significantly improved rate performance, cycling performance and/or high-temperature stability.

In a first aspect of the present application, a positive electrode active material with a core-shell structure is provided, which includes an inner core and a coating layer coating at least part of the inner core, wherein the inner core has a chemical formula of LiₐAₓMn_{1-y}B_{y}P_{1-z}C_{z}O₄₋ₙDₙ, in which A includes one or more elements selected from Zn, Al, Na, K, Mg, Nb, Mo and W, B includes one or more elements selected from Ti, V, Zr, Fe, Ni, Mg, Co, Ga, Sn, Sb, Nb and Ge, C includes one or more elements selected from B (boron), S, Si and N, and D includes one or more elements selected from S, F, Cl and Br, and a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; the inner core is electrically neutral; and the coating layer comprises a polymer which comprises one or more selected from polysiloxanes with a linear structure and polysiloxanes with a ring structure.

In the present application, by doping a compound LiMnPO₄ at Li, Mn, P and O positions with specific amounts of specific elements, an improved rate performance can be obtained while the dissolution of Mn and Mn-position doping element is reduced, thereby obtaining improved cycling performance and/or high-temperature stability; and the gram capacity and compacted density of the positive electrode active material can also be enhanced. In the present application, by coating the inner core with a coating layer, the dissolution of Mn and Mn-position doping elements can be further reduced and significantly improved cycling performance and/or high-temperature stability are achieved.

In any embodiment of the present application, the polymer comprises at least one of the structure units shown in formula 1, 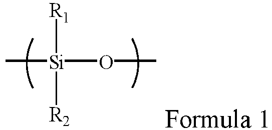 wherein R₁ and R₂ each independently represent H or at least one selected from the group consisting of the following functional groups: -COOH, -OH, -SH, -CN, -SCN, an amino, a phosphate group, a carboxylate group, an amido, an aldehyde group, a sulfonyl, a polyether segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group and a C2-C20 halogenated heteroaromatic hydrocarbon group. Optionally R₁ and R₂ each independently represent H or at least one selected from the group consisting of the following functional groups: an amino group, a phosphate group, a polyether segment, a C1-C8 alkyl, a C1-C8 haloalkyl, a C1-C8 heteroalkyl, a C1-C8 halogenated heteroalkyl, a C2-C8 alkenyl and a C2-C8 haloalkenyl group.

These functional groups can bind the acid substances in the electrolyte solution, to alleviate the aggression of the acid substances in the electrolyte solution on the surface of the positive electrode active material. When these functional groups attract electrons, the Si atom in the Si-O-backbone of polysiloxane lacks electrons to a greater extent such that its affinity to the F-containing ions in the electrolyte solution can be further enhanced, the aggression of the acid substances in the electrolyte solution on the surface of the positive electrode active material can be further alleviated, and the dissolution of Mn and Mn-position doping element is reduced, which significantly improves the cycling performance and/or high-temperature stability of the battery.

In any embodiment of the present application, the polysiloxanes with a linear structure comprises a capping group. Optionally, the capping group includes at least one selected from the group consisting of the following functional groups: a polyether, a C1-C8 alkyl, a C1-C8 haloalkyl, a C1-C8 heteroalkyl, a C1-C8 halogenated heteroalkyl, a C2-C8 alkenyl, a C2-C8 haloalkenyl, a C6-C20 aromatic hydrocarbon group, a C1-C8 alkoxy, a C2-C8 epoxy group, a hydroxyl, a C1-C8 hydroxyalkyl, an amino, a C1-C8 aminoalkyl, a carboxyl, and a C1-C8 carboxyalkyl.

In any embodiment of the present application, the polysiloxanes with a linear structure includes one or more of polydimethylsiloxane, polydiethylsiloxane, polymethylethylsiloxane, polymethylvinylsiloxane, polyphenylmethylsiloxane, polymethylhydrogensiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxyl-terminated polydimethylsiloxane, polymethyltrifluoropropylsiloxane, perfluorooctylmethylpolysiloxane, aminoethylaminopropyl polydimethylsiloxane, polyether-terminated polydimethylsiloxane, side-chain aminopropyl polysiloxane, aminopropyl-terminated polydimethylsiloxane, side-chain phosphate-grafted polydimethylsiloxane, side-chain polyether-grafted polydimethylsiloxane. Optionally, the polysiloxanes with a linear structure includes one or more of polymethyltrifluoropropylsiloxane, aminoethylaminopropyl polydimethylsiloxane, side-chain phosphate-grafted polydimethylsiloxane, polymethylchloropropylsiloxane and polydimethylsiloxane.

In any embodiment of the present application, the polysiloxanes with a ring structure includes one or more of 1,3,5,7-octamethylcyclotetrasiloxane, 1,3,5,7-tetrahydro-1,3,5,7-tetramethylcyclotetrasiloxane, decamethylcyclopentasiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecylmethylcyclooctasiloxane, tetradecamethylcycloheptasiloxane, and cyclopolydimethylsiloxane.

In any embodiment of the present application, the polymer is selected from the polysiloxanes with a linear structure. Since the electrons in a ring of the cyclic polysiloxane have a certain capability of delocalization, the Si-O-backbone thereof has a lower affinity to F-containing ions enriched with electrons compared with that of the linear polysiloxane, thereby causing a lower removal rate of F-containing ions from the electrolyte solution, weaker effect in the reduction of the dissolution of Mn and Mn-position doping element, and lesser improvement on the cycling performance of the battery.

In any embodiment of the present application, the number average molecular weight of the polymer is 300000 or less, and optionally between 400 and 80000. With a number average molecular weight in the suitable range, the positive electrode active material can also exhibit both good dynamic performance and high-temperature stability.

In any embodiment of the present application, the polysiloxane has a polar functional group mass percentage content of α, with 0 ≤ α < 50%, and optionally 5% ≤ α ≤ 30%. With a content of polar functional group in the polysiloxane in the suitable range, better coating and modification effects on the inner core can be achieved.

In any embodiment of the present application, the coating amount of the coating layer is 0.01 wt% to 10 wt%, optionally 0.1 wt% to 5 wt%, and further 0.1 wt% to 2 wt%, based on the weight of the inner core. With a coating amount of the coating layer in the suitable range, better coating and modification effects on the inner core can be achieved.

In any embodiment of the present application, the positive electrode active material further comprises a carbon layer between the inner core and the coating layer. Therefore, the electrical conductivity of the positive electrode active material can be improved.

In any embodiment of the present application, A, C and D are each independently any one element in their respective ranges above, and B is at least two elements in its range.

Optionally, A is any one element selected from Mg and Nb.

Optionally, B is at least two elements selected from Fe, Ti, V, Co and Mg, and further Fe and one or more elements selected from Ti, V, Co and Mg.

Optionally, C is S.

Optionally, D is F.

Therefore, the rate performance, energy density and/or high-temperature stability of the battery can be further improved.

In any embodiment of the present application, x is selected from a range of 0.001 to 0.005. Thus, the dynamic performance of the positive electrode active material can be further improved.

In any embodiment of the present application, y is selected from a range of 0.01 to 0.5, and optionally a range of 0.25 to 0.5. Thus, the gram capacity and rate performance of the positive electrode active material can be further improved.

In any embodiment of the present application, z is selected from a range of 0.001 to 0.005. Thus, the rate performance of the battery can be further improved.

In any embodiment of the present application, n is selected from a range of 0.001 to 0.005. Thus, the high-temperature stability of the battery can be further improved.

In any embodiment of the present application, (1-y) : y is in a range of 1 to 4, and optionally a range of 1.5 to 3, and a : x is in a range of 9 to 1100, and optionally a range of 190 to 998. Thus, the energy density and the cycling performance of the battery can be further improved.

In any embodiment of the present application, the lattice change rate of the positive electrode active material is 8% or less, and optionally 4% or less. Thus, the rate performance of the battery can be improved.

In any embodiment of the present application, the Li/Mn antisite defect concentration of the positive electrode active material is 2% or less, and optionally 0.5% or less. Therefore, the gram capacity and the rate performance of the positive electrode active material can be improved.

In any embodiment of the present application, the surface oxygen valence state of the positive electrode active material is -1.82 or less, and optionally -1.89 to -1.98. Thus, the cycling performance and the high-temperature stability of the battery can be improved.

In any embodiment of the present application, the compacted density of the positive electrode active material under 3T is 2.0 g/cm³ or more, and optionally 2.2 g/cm³ or more. Thus, the volumetric energy density of the battery can be improved.

In a second aspect of the present application, a method for preparing a positive electrode active material is provided, the method comprising the following steps:
(1) a manganese source, a source of an element B and an acid are dissolved and stirred in a solvent to generate a suspension of an element B-doped manganese salt, the suspension is filtered, and the resultant filter cake is dried, to obtain the element B-doped manganese salt;
(2) a lithium source, a phosphorus source, a source of an element A, a source of an element C and a source of an element D, a solvent and the element B-doped manganese salt obtained instep (1) are added into a reaction container, and ground and mixed to obtain a slurry;
(3) the slurry obtained in step (2) is transferred into a spray drying apparatus for spray-drying granulation, to obtain particles;
(4) the particles obtained in step (3) are sintered, to obtain an inner core; and
(5) the inner core obtained in step (4) is coated with a polymer using a dry or wet coating method, to obtain the positive electrode active material, wherein the polymer includes one or more selected from polysiloxanes with a linear structure and polysiloxanes with a ring structure, and
the positive electrode active material has a core-shell structure, which includes an inner core and a shell coating at least part of the inner core, wherein the inner core has a chemical formula of LiₐAₓMn_{1-y}B_{y}P_{1-z}C_{z}O₄₋ₙDₙ, in which A includes one or more elements selected from Zn, Al, Na, K, Mg, Nb, Mo and W, B includes one or more elements selected from Ti, V, Zr, Fe, Ni, Mg, Co, Ga, Sn, Sb, Nb and Ge, C includes one or more elements selected from B (boron), S, Si and N, and D includes one or more elements selected from S, F, Cl and Br, and a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1;the inner core is electrically neutral; and the coating layer comprises a polymer which comprises one or more selected from polysiloxanes with a linear structure and polysiloxanes with a ring structure.

In any embodiment of the present application, the source of the element A is selected from at least one of the elementary substance, oxide, phosphate, oxalate, carbonate and sulfate of the element A, the source of the element B is selected from at least one of the elementary substance, oxide, phosphate, oxalate, carbonate and sulfate of the element B, the source of the element C is selected from at least one of the sulfate, borate, nitrate and silicate of the element C, and the source of the element D is selected from at least one of the elementary substance and an ammonium salt of the element D. Thus, by selecting the sources of the doping elements in the above ranges, the performance of the positive electrode active material can be improved.

In any embodiment of the present application, the stirring of step (1) is carried out at a temperature in a range of 60°C to 120°C.

In any embodiment of the present application, the stirring of step (1) is carried out at a stirring speed of 200 to 800 rpm.

In any embodiment of the present application, the grinding and mixing of step (2) are carried out for 8 to 15 h.

Thus, by controlling the reaction temperature, the stirring speed and the mixing time during the doping, the doping elements can be uniformly distributed, and the sintered material has a higher degree of crystallinity, thereby improving the gram capacity, rate performance and the like of the positive electrode active material.

In any embodiment of the present application, the sintering of step (4) is carried out in a temperature range of 600°C to 900°C for 6 to 14 h. Thus, the high-temperature stability and cycling performance of the battery can be improved.

In any embodiment of the present application, step (2) also comprises: adding a carbon source into the reaction container for grinding and mixing. Thus, a positive electrode active material, which is coated with carbon between the inner core and the coating layer, can be obtained.

In a third aspect of the present application, a positive electrode plate is provided, comprising a positive electrode current collector and a positive electrode film layer provided on at least one surface of the positive electrode current collector, wherein the positive electrode film layer comprises a positive electrode active material of the first aspect of the present application or a positive electrode active material prepared by the method of the second aspect of the present application, and the content of the positive electrode active material in the positive electrode film layer is no less than 10 wt%, based on the total weight of the positive electrode film layer.

In any embodiment of the present application, the content of the positive electrode active material in the positive electrode film layer is 95 to 99.5 wt%, based on the total weight of the positive electrode film layer. With a content of the positive electrode active material in the above-mentioned range, the advantages of the positive electrode active material of the present application can be made full use of.

In any embodiment of the present application, the solid-liquid contact angle between the positive electrode film layer and the non-aqueous organic solvent lies between 3° and 90°, optionally between 3° and 60°, and further between 10° and 30°. With a contact angle in the suitable range, a battery with not only a high energy density, but also good rate performance, cycling performance and high-temperature stability can be obtained.

In any embodiment of the present application, the positive electrode film layer has a porosity of 15% to 50%, and optionally 20% to 40%. With a porosity in the suitable range, a battery with not only a high energy density, but also good rate performance, cycling performance and high-temperature stability can be obtained.

In a fourth aspect of the present application, a secondary battery is provided, comprising the positive electrode active material of the first aspect of the present application or the positive electrode active material prepared by the method of the second aspect of the present application or the positive electrode plate of the third aspect of the present application.

In a fifth aspect of the present application, a power consuming device is provided, comprising the secondary battery of the fourth aspect of the present application.

The positive electrode plate, the secondary battery and the power consuming device of the present application comprise the positive electrode active material of the present application, and thus have at least the same advantages as the positive electrode active material.

### Brief Description of the Drawings

In order to illustrate the technical solutions of the examples of the present application more clearly, the drawings used in the examples of the present application will be described briefly below. Apparently, the drawings described below are merely some embodiments of the present application, and those of ordinary skill in the art may derive other drawings from these drawings without creative efforts.
Fig. 1 is a schematic diagram of an embodiment of the secondary battery of the present application.
Fig. 2 is an exploded schematic diagram of the embodiment of the secondary battery in Fig. 1.
Fig. 3 is a schematic diagram of an embodiment of the battery module of the present application.
Fig. 4 is a schematic diagram of an embodiment of the battery pack of the present application.
Fig. 5 is an exploded schematic diagram of the embodiment of the battery pack shown in Fig. 4.
Fig. 6 is a schematic diagram of an embodiment of a power consuming device comprising the secondary battery of the present application as a power supply.
Fig. 7 shows an X-ray diffraction (XRD) pattern of the inner core of undoped LiMnPO₄ and a positive electrode active material prepared in example 2.
Fig. 8 shows an energy-dispersive X-ray spectroscopy (EDS) diagram of the inner core of a positive electrode active material prepared in example 2.

In the drawings, the figures are not necessarily drawn to scale. List of reference numerals: 1 Battery pack, 2 Upper case body, 3 Lower case body, 4 Battery module, 5 Secondary battery, 51 Housing, 52 Electrode assembly, 53 Cover plate.

### Detailed Description of Embodiments

Hereinafter, embodiments of the positive electrode active material and the preparation method therefor, the positive electrode plate comprising the same, the secondary battery, and the power consuming device of the present application are described in detail and specifically disclosed with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

Unless otherwise stated, all the embodiments and optional embodiments of the present application can be combined with one another to form new technical solutions, and such technical solutions should be considered to be included in the disclosure content of the present application.

Unless otherwise stated, all technical features and optional technical features of the present application can be combined with one another to form new technical solutions, and such technical solutions should be considered to be included in the disclosure content of the present application.

Unless otherwise stated, all the steps of the present application can be carried out sequentially or randomly, preferably sequentially. For example, the method comprising steps (a) and (b) indicates that the method may comprise steps (a) and (b) performed sequentially, and may further include steps (b) and (a) performed sequentially. For example, reference to "the method may further comprise step (c)" indicates that step (c) may be added to the method in any order, e.g., the method may comprise steps (a), (b) and (c), steps (a), (c) and (b), or also steps (c), (a) and (b), etc.

The terms "comprise" and "include" mentioned in the present application are openended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

It should be noted that the term "coating layer" herein refers to a material layer coating the inner core of the lithium manganese phosphate, which may fully or partially coat the inner core of the lithium manganese phosphate. The usage of the term "coating layer" serves only to facilitate the description, with no intention of limiting the present invention. Herein, the term "aliphatic hydrocarbon group" includes alkyl, alkenyl, and alkynyl groups, and the term "heteroaliphatic hydrocarbon group" refers to an aliphatic hydrocarbon group containing a heteroatom (for example, N, O, S and the like). The term "heteroalkyl" refers to an alkyl group containing a heteroatom (for example, N, O, S and the like), which may be an alkoxy or alkylthio group and the like.

In the present application, "about" a numerical value means a range, i.e., a range of ±10% of the numerical value.

Through repeated studies on the effects of doping lithium manganese phosphate at Li, Mn, P and O positions with various elements, the inventors of the present application have found that by use of simultaneous doping at the above four positions with specific amounts of specific elements and coating the surface with a coating layer of polysiloxane, markedly improved rate performance and cycling performance as well as high-temperature stability can be obtained, thereby obtaining an improved lithium manganese phosphate positive electrode active material.

### Positive electrode active material

In particular, in a first aspect of the present application, a positive electrode active material with a core-shell structure is purposed, which includes an inner core and a coating layer coating the inner core, wherein the inner core has a chemical formula of LiₐAₓMn_{1-y}B_{y}P_{1-z}C_{z}O₄₋ₙDₙ, in which A includes one or more elements selected from Zn, Al, Na, K, Mg, Nb, Mo and W, B includes one or more elements selected from Ti, V, Zr, Fe, Ni, Mg, Co, Ga, Sn, Sb, Nb and Ge, C includes one or more elements selected from B (boron), S, Si and N, and D includes one or more elements selected from S, F, Cl and Br, and a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; the inner core is electrically neutral; and the coating layer comprises a polymer which comprises one or more selected from polysiloxanes with a linear structure and polysiloxanes with a ring structure.

Unless otherwise stated, in the above chemical formula, when A is a combination of at least two elements, the above definition of the numerical range of x not only represents a definition of the stoichiometric number of each element as A, but also represents a definition of the sum of the stoichiometric numbers of the elements as A. For example, when A is a combination of at least two elements of A1, A2...and An, the stoichiometric numbers x1, x2...and xn of A1, A2...and An each fall within the numerical range of x defined in the present application, and the sum of x1, x2...and xn also falls within this numerical range. Similarly, when B, C and D are each a combination of at least two elements, the definitions of the numerical ranges of the stoichiometric numbers of B, C and D in the present application also have the above meanings.

The inner core of the positive electrode active material of the present application is obtained by doping a compound LiMnPO₄ with elements, wherein A, B, C and D are respectively the elements for doping at Li, Mn, P and O positions of the compound LiMnPO₄. Without wishing to be bound by theory, it is now believed that a performance improvement of lithium manganese phosphate is associated with a reduction in the lattice change rate of lithium manganese phosphate in a lithium intercalation/de-intercalation process and a decrease in surface activity. A reduction in the lattice change rate can reduce the difference of lattice constants between two phases at a grain boundary, lower the interface stress, and enhance the Li⁺ transport ability at an interface, thereby improving the rate performance of the positive electrode active material. A high surface activity can easily lead to severe interfacial side reactions, and exacerbates gas production, electrolyte solution consumption and interface damage, thereby affecting the cycling performance and the like of the battery. In the present application, the lattice change rate is reduced by doping at the positions of Li and Mn. The Mn-position doping also effectively decreases the surface activity, thereby inhibiting the dissolution of manganese ions and the interfacial side reactions between the positive electrode active material and the electrolyte solution. The P-position doping increases the change rate of the Mn-O bond length and reduces the small-polaron migration barrier of the material, which is beneficial for increasing electronic conductivity. The O-position doping plays a good role in reducing the interfacial side reactions. The P-position and O-position doping also has an effect on the dissolution of manganese ions due to antisite defects and the dynamic performance.

Therefore, the doping reduces the antisite effect concentration in the positive electrode active material, improves the dynamic performance and gram capacity of the positive electrode active material, and can also change the particle morphology, thereby increasing the compacted density. The inventors of the present application have surprisingly found that: By doping a compound LiMnPO₄ at Li, Mn, P and O positions with specific amounts of specific elements, an improved rate performance can be obtained while the dissolution of Mn and Mn-position doping element is reduced, thereby obtaining improved cycling performance and/or high-temperature stability; and the gram capacity and compacted density of the positive electrode active material can also be enhanced. Optionally, A is one or more elements selected from Zn, Al, Na, K, Mg, Nb, Mo and W, B is one or more elements selected from Ti, V, Zr, Fe, Ni, Mg, Co, Ga, Sn, Sb, Nb and Ge, C is one or more elements selected from B (boron), S, Si and N, and D is one or more elements selected from S, F, Cl and Br.

The coating layer of the present application comprises one or more of polysiloxanes with a linear structure and polysiloxanes with a ring structure. The coating layer can isolate the electrolyte solution and the positive electrode active material, which advantageously reduces the aggression of the electrolyte solution on the positive electrode active material. The Si-O-backbone of the polysiloxane can remove the F-containing ions from the electrolyte solution, to alleviate the aggression of the acid substances on the surface of the positive electrode active material. The polysiloxane has a certain degree of hydrophobicity and thus can increase the contact angle between the electrolyte solution and the positive electrode plate and alleviate the aggression of the electrolyte solution on the surface of the positive electrode active material.

Therefore, by coating the inner core with a coating layer, the dissolution of Mn and Mn-position doping elements can be further reduced, and significantly improved cycling performance and/or high-temperature stability are achieved.

It should be pointed out that, by comparing the XRD spectra before and after doping of LiMnPO₄ in the present application, it has been found that the positions of the main characteristic peaks, before doping, of the positive electrode active material of the present application are basically consistent with those after doping LiMnPO₄, indicating that doped lithium manganese phosphate positive electrode active material has no impurity phase, and the improvement of the performance of the battery mainly results from element doping, not the impurity phase.

In some embodiments, A, C and D are each independently any one of elements in their respective ranges above, and B is at least two of elements in its range. Therefore, the composition of the inner core of the positive electrode active material can be controlled more easily and accurately.

Optionally, A is any one element selected from Mg and Nb.

Optionally, B is at least two elements selected from Fe, Ti, V, Co and Mg, and optionally Fe and one or more elements selected from Ti, V, Co and Mg.

Optionally, C is S.

Optionally, D is F.

By selecting the Li-site doping element in the above ranges, the lattice change rate in a lithium de-intercalation process can be further reduced, thereby further improving the rate performance of the battery. By selecting the Mn-site doping element in the above ranges, the electronic conductivity can be further increased while the lattice change rate is further reduced, thereby improving the rate performance and energy density of the battery. By selecting the P-site doping element in the above ranges, the rate performance of the battery can be further improved. By selecting the O-site doping element in the above ranges, interfacial side reactions can be further alleviated, thereby improving the high-temperature stability of the battery.
a is selected from a range of 0.9 to 1.1, for example 0.97, 0.977, 0.984, 0.988, 0.99, 0.991, 0.992, 0.993, 0.994, 0.995, 0.996, 0.997, 0.998, and 1.01.
x is selected from a range of 0.001 to 0.1, for example 0.001, and 0.005.
y is selected from a range of 0.001 to 0.5, for example 0.001, 0.005, 0.02, 0.05, 0.1, 0.15, 0.2, 0.25, 0.3, 0.34, 0.345, 0.349, 0.35, and 0.4.
z is selected from a range of 0.001 to 0.1, for example 0.001, 0.005, 0.08, and 0.1.
n is selected from a range of 0.001 to 0.1, for example 0.001, 0.005, 0.08, and 0.1.

In some embodiments, x is selected from a range of 0.001 to 0.005.

In some embodiments, y is selected from a range of 0.01 to 0.5, and optionally in a range of 0.25 to 0.5.

In some embodiments, z is selected from a range of 0.001 to 0.005.

In some embodiments, n is selected from a range of 0.001 to 0.005.

By selecting the value of x from the above ranges, the dynamic performance of the positive electrode active material can be further improved. By selecting the value of y from the above ranges, the gram capacity and rate performance of the positive electrode active material can be further improved. By selecting the value of z from the above ranges, the rate performance of the battery can be further improved. By selecting the value of n from the above ranges, the high-temperature stability of the battery can be further improved.

In some embodiments, for the inner core of the positive electrode active material, (1-y) : y is in a range of 1 to 4, and optionally a range of 1.5 to 3, and a : x is in a range of 9 to 1100, and optionally a range of 190 to 998. Here, y denotes the sum of the stoichiometric numbers of the Mn-position doping elements. When the above conditions are satisfied, the energy density and cycling performance of the battery can be further improved.

In some embodiments, the polymer comprises at least one of the structure unit shown in formula 1, 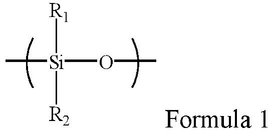 wherein R₁ and R₂ each independently represent H or at least one selected from the group consisting of the following functional groups: -COOH, -OH, -SH, -CN, -SCN, an amino, a phosphate group, a carboxylate group, an amido, an aldehyde group, a sulfonyl, a polyether segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group and a C2-C20 halogenated heteroaromatic hydrocarbon group. Optionally R₁ and R₂ each independently represent H or at least one selected from the group consisting of the following functional groups: an amino group, a phosphate group, a polyether segment, a C1-C8 alkyl, a C1-C8 haloalkyl, a C1-C8 heteroalkyl, a C1-C8 halogenated heteroalkyl, a C2-C8 alkenyl and a C2-C8 haloalkenyl group.

These functional groups can bind the acid substances in the electrolyte solution, to alleviate the aggression of the acid substances in the electrolyte solution on the surface of the positive electrode active material. When these functional groups attract electrons, the Si atom in the Si-O-backbone of polysiloxane lacks electrons to a greater extent such that its affinity to the F-containing ions in the electrolyte solution can be further enhanced, the aggression of the acid substances in the electrolyte solution on the surface of the positive electrode active material can be further alleviated, and the dissolution of Mn and Mn-position doping element is reduced, which significantly improves the cycling performance and/or high-temperature stability of the battery.

In some embodiments, the polysiloxanes with a linear structure can comprise a capping group. Optionally, the capping group includes at least one selected from the group consisting of the following functional groups: a polyether, a C1-C8 alkyl, a C1-C8 haloalkyl, a C1-C8 heteroalkyl, a C1-C8 halogenated heteroalkyl, a C2-C8 alkenyl, a C2-C8 haloalkenyl, a C6-C20 aromatic hydrocarbon group, a C1-C8 alkoxy, a C2-C8 epoxy group, a hydroxyl, a C1-C8 hydroxyalkyl, an amino, a C1-C8 aminoalkyl, a carboxyl, and a C1-C8 carboxyalkyl.

As an example, the polysiloxanes with a linear structure includes, but not limited to, one or more of polydimethylsiloxane, polydiethylsiloxane, polymethylethylsiloxane, polymethylvinylsiloxane, polyphenylmethylsiloxane, polymethylhydrogensiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxyl-terminated polydimethylsiloxane, polymethyltrifluoropropylsiloxane, perfluorooctylmethylpolysiloxane, aminoethylaminopropyl polydimethylsiloxane, polyether-terminated polydimethylsiloxane, side-chain aminopropyl polysiloxane, aminopropyl-terminated polydimethylsiloxane, side-chain phosphate-grafted polydimethylsiloxane, and side-chain polyether-grafted polydimethylsiloxane.

Optionally, the polysiloxanes with a linear structure includes one or more of polymethyltrifluoropropylsiloxane, aminoethylaminopropyl polydimethylsiloxane, side-chain phosphate-grafted polydimethylsiloxane, polymethylchloropropylsiloxane and polydimethylsiloxane.

As an example, the polysiloxanes with a ring structure includes one or more of 1,3,5,7-octamethylcyclotetrasiloxane, 1,3,5,7-tetrahydro-1,3,5,7-tetramethylcyclotetrasiloxane, decamethylcyclopentasiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecylmethylcyclooctasiloxane, tetradecamethylcycloheptasiloxane, and cyclopolydimethylsiloxane.

In some embodiments, the polymer is selected from the polysiloxanes with a linear structure. Since the electrons in a ring of the cyclic polysiloxane have a certain capability of delocalization, the Si-O-backbone thereof has a lower affinity to F-containing ions enriched with electrons compared with that of the linear polysiloxane, thereby causing a lower removal rate of F-containing ions from the electrolyte solution, weaker effect in the reduction of the dissolution of Mn and Mn-position doping element, and lesser improvement on the cycling performance of the battery.

In some embodiments, the number average molecular weight of the polymer is 300000 or less, for example it can be 400 to 300000, 400 to 200000, 400 to 100000, 400 to 80000, 400 to 50000, 400 to 20000, 400 to 10000, 1000 to 100000, 1000 to 50000, 1000 to 20000, and 1000 to 10000. The number average molecular weight of a polymer can be measured with a method known in the art, for example, by gel permeation chromatography (GPC). PL-GPC 220 High-temperature gel permeation chromatograph can be used as the measurement instrument. In the present application, "polymer" can be either an oligomer or a polymer and is herein not particularly limited.

With a number average molecular weight in a suitable range, the positive electrode active material can also exhibit both good dynamic performance and high-temperature stability. The following situations can be avoided effectively: If the number average molecular weight of the polymer is too low, the inner core may not be substantially coated and modified; If the number average molecular weight of the polymer is too high, it may has strong hydrophobicity, which in turn may influence the dynamic performance of the battery and at the same time may lead to less optimal coating and modification effect.

In some embodiments, the polysiloxane has a polar functional group mass content percentage of α, with 0 ≤ α < 50%. Optionally, 5% ≤ α ≤ 30%.

In the present application, "the polar functional group mass percentage content of the polysiloxane" refers to the mass proportion of the polar functional groups in R₁, R₂ and the capping group in the polysiloxane. In the present application, the polar functional group includes one or more of -COOH, -OH, -SH, -CN, -SCN, an amino group (including -NH₂ and -NH-), a phosphate group, a carboxylate group (-COO-), an amido group (-CONH-), an aldehyde group (-CHO), a sulfonyl group (-S(=O)₂-), a polyether segment, halide, an alkoxy group, and an epoxy group. When the above-mentioned polar functional groups are connected directly to silicon atoms, α refers to the mass percentage of these polar functional groups in the polysiloxane. When the above-mentioned polar functional groups are not connected directly to silicon atoms, α refers to the sum of mass percentages of the polar functional groups and divalent to tetravalent methyl groups (for example -CH₂, -CH-, -C-, etc.) which are directly connected to the polar functional groups in the polysiloxanes. The expression "divalent to tetravalent methyl groups" herein refers to the carbon atoms which are directly connected to the polar functional groups and positioned between a polar functional group and a silicon atom, as well as the other nonpolar functional groups connected to the carbon atoms. For example, for polymethyltrifluoropropylsiloxane, α refers to the mass percentage content of -CF₃ therein, excluding ethylene groups. For example, for polymethylchloropropylsiloxane, α refers to the mass percentage content of -CH₂Cl therein, excluding ethylene groups. For example, for hydroxypropyl-terminated polydimethylsiloxane, α refers to the mass percentage content of -CH₂OH therein. The mass percentage content of the polar functional groups in the polysiloxane can be measured with a method known in the art, for example with a titration method (e. g. acid-base titration method, redox titration method, precipitation titration method), infrared spectrometry, or nuclear magnetic resonance spectrometry.

With a content of polar functional group in the polysiloxane in a suitable range, better coating and modification effects on the inner core can be achieved. The following situations can be avoided effectively: When the content of polar functional groups in the polysiloxane is too high, the effect of removal of F-containing ions from the electrolyte solution will not be further improved, but may cause the contact angle between the electrolyte solution and the positive electrode plate to reduce, thereby leading to an insignificant improvement in terms of the cycling performance and/or high-temperature stability of the battery.

In some embodiments, the coating amount of the coating layer is 0.01 wt% to 10 wt%, optionally 0.1 wt% to 5 wt%, and further 0.1 wt% to 2 wt%, based on the weight of the inner core. With a coating amount of the coating layer in a suitable range, better coating and modification effects on the inner core can be achieved. The following situations can be avoided effectively: With an excessively low coating amount of the coating layer, the coating and modification effects on the inner core may be insignificant. With an excessively high coating amount of the coating layer, the impedance of the battery may be increased and thus the rate performance and cycling performance of the battery may also be affected.

In some embodiments, the positive electrode active material can further comprise a carbon layer between the inner core and the coating layer. Therefore, the electrical conductivity of the positive electrode active material can be improved.

In some embodiments, the lattice change rate of the positive electrode active material is 8% or less, and optionally the lattice change rate is 4% or less. By lowering the lattice change rate, the Li ion transport can be made easier, that is, the Li ions have a stronger migration ability in the material, which is beneficial in improving the rate performance of the battery. The lattice change rate may be measured with a method known in the art, e.g., X-ray diffraction (XRD).

In some embodiments, the Li/Mn anti site defect concentration of the positive electrode active material is 2% or less, and optionally, the Li/Mn antisite defect concentration is no more than 0.5%. The so-called Li/Mn antisite defect means that the positions of Li⁺ and Mn²⁺ have been exchanged in the LiMnPO₄ lattices. The Li/Mn antisite defect concentration refers to a percentage of the Li⁺ exchanged with Mn²⁺ based on the total amount of Li⁺ in the positive electrode active material. The Mn²⁺ of antisite defects can hinder the transport of Li⁺, and a reduction in the Li/Mn antisite defect concentration is beneficial in improving the gram capacity and rate performance of the positive electrode active material. The Li/Mn antisite defect concentration may be measured with a method known in the art, e.g., XRD.

In some embodiments, the surface oxygen valence state of the positive electrode active material is -1.82 or less, and optionally -1.89 to -1.98. By lowering the surface oxygen valence state, the interfacial side reactions between the positive electrode active material and an electrolyte solution can be alleviated, thereby improving the cycling performance and high-temperature stability of the battery. The surface oxygen valence state may be measured with a method known in the art, e.g., electron energy loss spectroscopy (EELS).

In some embodiments, the compacted density of the positive electrode active material under 3T (tons) is 2.0 g/cm³ or more, and optionally 2.2 g/cm³ or more. A higher compacted density indicates a greater weight of the positive electrode active material per unit volume, and thus, increasing the compacted density is beneficial in increasing the volumetric energy density of a battery. The compacted density may be measured in accordance with GB/T 24533-2009.

### Preparation method

A second aspect of the present application relates to a method for preparing the positive electrode active material of the first aspect of the present application, comprising the steps of:
(1) a manganese source, a source of an element B and an acid are dissolved and stirred in a solvent to generate a suspension of an element B-doped manganese salt, the suspension is filtered, and the resultant filter cake is dried, to obtain the element B-doped manganese salt;
(2) a lithium source, a phosphorus source, a source of an element A, a source of an element C and a source of an element D, a solvent and the element B-doped manganese salt obtained in step (1) are added into a reaction container, and ground and mixed to obtain a slurry;
(3) the slurry obtained in step (2) is transferred into a spray drying apparatus for spray-drying granulation, to obtain particles;
(4) the particles obtained in step (3) are sintered, to obtain an inner core; and
(5) the inner core obtained in step (4) is coated with a polymer using a dry or wet coating method, to obtain the positive electrode active material, wherein the polymer includes one or more selected from polysiloxanes with a linear structure and polysiloxanes with a ring structure.

In some embodiments, the source of an element A is selected from at least one of the elementary substance, oxide, phosphate, oxalate, carbonate and sulfate of the element A, the source of an element B is selected from at least one of the elementary substance, oxide, phosphate, oxalate, carbonate and sulfate of the element B, the source of an element C is selected from at least one of the sulfate, borate, nitrate and silicate of the element C, and the source of an element D is selected from at least one of the elementary substance and an ammonium salt of the element D. By selecting the sources of the doping elements, the distribution uniformity of the doping elements can be improved, thereby improving the performance of the positive electrode active material.

In some embodiments, the acid is selected from one or more of hydrochloric acid, sulfuric acid, nitric acid, phosphoric acid, an organic acid like oxalic acid, etc, and may be, for example, oxalic acid. In some embodiments, the acid is a dilute acid with a concentration of 60 wt% or less.

In some embodiments, the manganese source may be a manganese-containing substance useful for preparing lithium manganese phosphate that is known in the art. For example, the manganese source may be selected from one or a combination of elemental manganese, manganese dioxide, manganese phosphate, manganese oxalate and manganese carbonate.

In some embodiments, the lithium source may be a lithium-containing substance useful for preparing lithium manganese phosphate that is known in the art. For example, the lithium source may be selected from one or a combination of lithium carbonate, lithium hydroxide, lithium phosphate and lithium dihydrogen phosphate.

In some embodiments, the phosphorus source may be a phosphorus-containing substance useful for preparing lithium manganese phosphate that is known in the art. For example, the phosphorus source may be selected from one or a combination of diammonium hydrogen phosphate, ammonium dihydrogen phosphate, ammonium phosphate and phosphoric acid.

The addition amounts of respective sources of the elements A, B, C and D depend on a target doping amount, and a ratio of the amounts of the lithium source, the manganese source and the phosphorus source conforms to a stoichiometric ratio.

In some embodiments, the solvents in step (1) and step (2) may each independently be a commonly used solvent for preparing a manganese salt and lithium manganese phosphate by those skilled in the art. For example, the solvents may each independently be selected from at least one of ethanol and water (e.g., deionized water), etc.

In some embodiments, the stirring of step (1) is carried out at a temperature in a range of 60°C to 120°C. In some embodiments, the stirring of step (1) is carried out at a stirring speed of 200 to 800 rpm, or 300 to 800 rpm, or 400 to 800 rpm. In some embodiments, the stirring of step (1) is carried out for 6 to 12 h. In some embodiments, the grinding and mixing of step (2) are carried out for 8 to 15 h.

By controlling the reaction temperature, the stirring speed and the mixing time during the doping, the doping elements can be uniformly distributed, and the sintered material has a higher degree of crystallinity, thereby improving the gram capacity, rate performance and the like of the positive electrode active material.

In some embodiments, in step (1), the filter cake may be washed before drying.

In some embodiments, the drying in step (1) may be carried out by means and conditions known to those skilled in the art. For example, the temperature of the drying may be in a range of 120°C to 300°C. Optionally, the dried filter cake may be ground into particles, for example, to a median particle size Dv₅₀ of the particles in a range of 50 to 200 nm. The median particle size Dv₅₀ refers to a particle size corresponding to a cumulative volume distribution percentage of the material reaching 50%. In the present application, the median particle size Dv₅₀ of the material may be determined using a laser diffraction particle size analysis method. For example, the determination may be carried out with reference to the standard GB/T 19077-2016 using a laser particle size analyzer (e.g., Malvern Master Size 3000).

In some embodiments, in step (2), a carbon source is also added into the reaction vessel for grinding and mixing. Therefore, the method can obtain a positive electrode active material, which is coated with carbon between the inner core and the coating layer. Optionally, the carbon source includes one or a combination of starch, surcose, glucose, polyvinyl alcohol, polyethylene glycol and citric acid. A molar ratio of the amount of the carbon source to the amount of the lithium source is usually in a range of 0.1% to 5%. The grinding may be carried out by suitable grinding means known in the art, e.g., sanding.

In some embodiments, the temperature and time of the spray drying in step (3) may be conventional temperature and time for spray drying in the art, e.g., at 100°C to 300°C for 1 to 6 h.

In some embodiments, the sintering in step (4) is carried out in a temperature range of 600°C to 900°C for 6 to 14 h. By controlling the sintering temperature and time, the degree of crystallinity of the positive electrode active material can be controlled, and the dissolution of Mn and Mn-position doping element after cycling is reduced, thereby improving the high-temperature stability and cycling performance of the battery.

In some embodiments, the sintering in step (4) is carried in a protective atmosphere, and the protective atmosphere can be nitrogen, an inert gas, hydrogen or a mixture thereof.

In some embodiments, preparing a positive electrode active material by dry coating in step (5) may comprise uniformly mixing the inner core and the polymer by using a mixer to form a mixed powder , and then sintering same in a sintering oven in an atmosphere of nitrogen or an inert gas. The sintering can be carried out in a temperature range of 200°C to 300°C for 4 to 10 h. Optionally, the sintering can be carried out at about 200°C, about 250°C or about 300°C for about 4 h, about 6 h, about 8 h or about 10 h. Optionally, the temperature and duration of the sintering can be any value in the above-mentioned ranges.

By controlling the sintering temperature and the duration within the above-mentioned ranges, the following situations can be effectively avoided: If the sintering temperature is excessively low or the sintering duration is excessively short, the binding between the coating layer and the inner core may not be solid enough. If the sintering temperature is excessively high or the sintering duration is excessively long, the polymer may be carbonated and the removal of F-containing ions from the electrolyte solution may not be effected.

In some embodiments, preparing a positive electrode active material by wet coating in step (5) may comprise dissolving the polymer in a solvent to form a coating solution, adding the inner core, mixing same homogeneously for obtaining a mixed slurry, transferring the mixed slurry to a wet packing machine, and drying while stirring in an atmosphere of nitrogen or an inert gas. The drying can be carried out at a temperature in a range of 100°C to 200°C, optionally 110°C to 190°C, more optionally 120°C to 180°C, even more optionally 120°C to 170°C, and most optionally 120°C to 160°C. The drying duration may be 3 to 9 hours, optionally 4 to 8 hours, more optionally 5 to 7 hours, and most optionally about 6 hours.

### Positive electrode plate

A third aspect of the present application provides a positive electrode plate, comprising a positive electrode current collector and a positive electrode film layer provided on at least one surface of the positive electrode current collector, the positive electrode film layer comprising the positive electrode active material of the first aspect of the present application or the positive electrode active material prepared by the method of the second aspect of the present application, and the content of the positive electrode active material in the positive electrode film layer being no less than 10 wt%, based on the total weight of the positive electrode film layer.

The positive electrode current collector has two opposite surfaces in the thickness direction thereof, and the positive electrode film layer is provided on either or both of the two opposite surfaces of the positive electrode current collector.

In some embodiments, the content of the positive electrode active material in the positive electrode film layer is 95 to 99.5 wt%, based on the total weight of the positive electrode film layer. With a content of the positive electrode active material in the above-mentioned range, the advantages of the positive electrode active material of the present application can be made full use of.

The positive electrode film layer does not exclude other positive electrode active materials other than the positive electrode active material in the first aspect of the present application or the positive electrode active material prepared by the method in the second aspect of the present application. For example, the positive electrode film layer may also include at least one of lithium transition metal oxides and modified compounds thereof. As an example, other positive electrode active materials may include, but not limited to, at least one of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and a respective modified compound thereof.

In some embodiments, the positive electrode film layer may also optionally comprise a positive electrode conductive agent. In the present application, the type of the positive electrode conductive agent is not particularly limited. As an example, the positive electrode conductive agent includes at least one of superconducting carbon, conductive graphite, acetylene black, carbon black, Ketjen black, carbon dots, carbon nanotubes, graphene and carbon nanofibers.

In some embodiments, the positive electrode film layer may also optionally comprise a positive electrode binder. In the present application, the type of the positive electrode binder is not particularly limited. As an example, the positive electrode binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorinated acrylate resin.

In some embodiments, the positive electrode current collector can be a metal foil or a composite current collector. As an example of the metal foil, aluminum foil can be used. The composite current collector may comprise a polymer material base layer and a metal material layer formed on at least one surface of the polymer material base layer. As an example, the metal material may be selected from at least one of aluminum, an aluminum alloy, nickel, a nickel alloy, titanium, a titanium alloy, silver, and a silver alloy. As an example, the polymer material base layer may be selected from polypropylene (PP), polyethylene terephthalate (PET), polybutylene terephthalate (PBT), polystyrene (PS), polystyrene ethylene (PE) etc.

In some embodiments, the solid-liquid contact angle between the positive electrode film layer and the non-aqueous organic solvent lies between 3° and 90°, optionally between 3° and 60°, and further between 10° and 30°. With a contact angle in the suitable range, a battery with not only a high energy density, but also good rate performance, cycling performance and high-temperature stability can be obtained. The following situations can be avoided effectively: If the contact angle is excessively small, the polymer may not realize the good coating and modification effect or may result in insignificant reduction in the dissolution of Mn and Mn-position doping element. If the contact angle is excessively large, the wetability of the positive electrode film layer by the electrolyte solution may be worsened, which influences the rate performance and the cycling performance of the battery. The solid-liquid contact angle between the positive electrode film layer and the non-aqueous organic solvent has a meaning that is well known in the art and can be measured with a method known in the art, for example according to GBT 30693-2014. An exemplary measuring method comprises the following steps: The non-aqueous organic solvent is dropwise added to the surface of the positive electrode plate at room temperature, and the contact angle is measured by a contact angle meter within 60 seconds. An optic contact angle meter of type LSA 200 from LAUDA Scientific Company, Germany, can be used as the measurement instrument. Non-aqueous organic solvents for the non-aqueous electrolyte solution of a secondary battery well known in the art can be used as the non-aqueous organic solvent. Optionally, ethylene carbonate (EC) can be used as the non-aqueous organic solvent.

In some embodiments, the porosity of the positive electrode film layer is 15% to 50%, optionally 20% to 40%. With a porosity in the suitable range, a battery with not only a high energy density, but also good rate performance, cycling performance and high-temperature stability can be obtained. The following situations can be avoided effectively: If the porosity is excessively low, the wetability of the positive electrode film layer by the electrolyte solution may be worsened, which influences the rate performance and the cycling performance of the battery. If the porosity is excessively high, the overall energy density of the battery may be affected. The porosity of the positive electrode film layer has a meaning that is well known in the art and can be measured by a method known in the art, for example according to GB/T 24586-2009.

The positive electrode film layer is usually formed by coating a positive electrode slurry on a positive electrode current collector, and drying and cold pressing same. The positive electrode slurry is usually formed by dispersing the positive electrode active material, an optional conductive agent, an optional binder and any other components in a solvent and stirring same evenly. The solvent may be N-methylpyrrolidone (NMP), but is not limited thereto.

Notably, the parameters (e.g., contact angle, porosity, etc.) of the positive electrode film layer given in the present application refer to the parameters of the positive electrode film layer on a single side of the positive electrode current collector. When the positive electrode film layers are provided on both sides of the positive electrode film layer, the parameters of the positive electrode film layer on either side satisfying the present application are deemed to fall within the scope of protection of the present application.

In addition, for the parameter measurements described above for the positive electrode film layer, the samples can be taken either during the preparation processes of the electrode plate or the battery, or from the prepared battery.

When the above test samples are taken from the prepared battery, as an example, the sampling can be carried out by the following steps: The battery is discharged (for safety, the battery is generally in a full-discharge state); the battery is disassembled, and the positive electrode plate is taken out and soaked in dimethyl carbonate (DMC) for a period (e.g., 2 h to 10 h); the positive electrode plate is taken out and dried at a certain temperature for a certain period (e.g., at 60°C for 4 h), and then, the dried positive electrode plate is taken out. Thus, sample can be taken from the dried positive electrode plate for the measurement of the parameters related to the positive electrode film layer described above in the present application.

### Secondary battery

A fourth aspect of the present application provides a secondary battery, comprising a positive electrode plate of the third aspect of the present application.

A secondary battery, also known as a rechargeable battery or an accumulator, refers to a battery of which active materials can be activated by means of charging for reuse of the battery after the battery is discharged. Generally, the secondary battery comprises an electrode assembly, which in turn comprises a positive electrode plate, a negative electrode plate, and a separator. The separator is provided between the positive electrode plate and the negative electrode plate, and mainly prevents positive and negative electrodes from short-circuiting and enables the active ions to pass through. The electrolyte is between the positive electrode plate and the negative electrode plate and functions for active ion conduction.

### [Positive electrode plate]

The positive electrode plate used in the secondary battery of the present application is the positive electrode plate according to any embodiment in the third aspect of the present application.

### [Negative electrode plate]

In some embodiments, the negative electrode plate comprises a negative electrode current collector and a negative electrode film layer that is provided on at least one surface of the negative electrode current collector and comprises a negative electrode active material. For example, the negative electrode current collector has two opposite surfaces in the thickness direction thereof, and the negative electrode film layer is provided on either or both of the two opposite surfaces of the negative electrode current collector.

The negative electrode active material may be a negative electrode active material well known in the art for secondary batteries. As an example, the negative electrode active material includes, but is not limited to, at least one of natural graphite, artificial graphite, soft carbon, hard carbon, silicon-based material, tin-based material and lithium titanate. The silicon-based material may include at least one of elemental silicon, a silicon oxide, a silicon carbon composite, a silicon nitrogen composite, and a silicon alloy material. The tin-based material may include at least one of elemental tin, tin oxides, and tin alloys. The present application is not limited to these materials, and other well-known conventional materials that can be used as a negative electrode active material for secondary batteries can also be used. These negative electrode active materials may be used alone or in combination of two or more.

In some embodiments, the negative electrode film layer may also optionally comprise a negative electrode conductive agent. In the present application, the type of the negative electrode conductive agent is not particularly limited. As an example, the negative electrode conductive agent can include at least one of superconducting carbon, conductive graphite, acetylene black, carbon black, Ketjen black, carbon dots, carbon nanotubes, graphene and carbon nanofibers.

In some embodiments, the negative electrode film layer may also optionally comprise a negative electrode binder. In the present application, the type of the negative electrode binder is not particularly limited. As an example, the negative electrode binder may include at least one of a styrene-butadiene rubber (SBR), a water-soluble unsaturated resin SR-1B, a water-based acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS).

In some embodiments, the negative electrode film layer may also optionally comprise other auxiliary agents. As an example, other auxiliary agents may be a thickening agent, for example, sodium carboxymethyl cellulose (CMC), a PTC thermistor material etc.

In some embodiments, the negative electrode current collector can be a metal foil or a composite current collector. As an example of the metal foil, a copper foil can be used. The composite current collector may comprise a polymer material base layer and a metal material layer formed on at least one surface of the polymer material base layer. As an example, the metal material may be selected from at least one of copper, a copper alloy, nickel, a nickel alloy, titanium, a titanium alloy, silver, and a silver alloy. As an example, the polymer material base layer may be selected from polypropylene (PP), polyethylene terephthalate (PET), polybutylene terephthalate (PBT), polystyrene (PS), polystyrene ethylene (PE) etc.

The negative electrode film layer is usually formed by coating a negative electrode slurry on a negative electrode current collector, and drying and cold pressing same. The negative electrode slurry is generally formed by dispersing a negative electrode active material, an optional conductive agent, an optional binder and optional other auxiliary agents, into a solvent and uniformly stirring same. The solvent may be N-methylpyrrolidone (NMP) or deionized water, but is not limited thereto.

The negative electrode plate may comprise other additional functional layers in addition to the negative electrode film layer. For example, in certain embodiments, the negative electrode plate of the present application can also comprise a conductive primer (e.g., composed of a conductive agent and a binder) provided between the negative electrode current collector and the negative electrode film layer and disposed on the surface of the negative electrode current collector. In some other embodiments, the negative electrode plate of the present application can also comprise a protective layer covering the surface of the negative electrode film layer.

### [Electrolyte]

The type of the electrolyte is not specifically limited in the present application, and can be selected according to actual requirements. For example, the electrolyte may be selected from at least one of a solid electrolyte and a liquid electrolyte (i.e., electrolyte solution).

In some embodiments, an electrolyte solution containing an electrolyte salt and a solvent is used as the electrolyte.

The type of the electrolyte salt is not specifically limited, and can be selected according to actual requirements. In some embodiments, as an example, the electrolyte salt may comprise at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium bisoxalatodifluorophosphate (LiDFOP) and lithium tetrafluorooxalate phosphate (LiTFOP).

The type of the solvent is not specifically limited, and can be selected according to actual requirements. In some embodiments, as an example, the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the electrolyte solution further optionally comprises an additive. For example, the additives may comprise negative electrode film-forming additives, positive electrode film-forming additives, and additives that can improve certain performance of the battery, such as additives that improve overcharge performance of the battery, additives that improve high-temperature performance of the battery, and those that improve low-temperature power performance of the battery.

### [Separator]

The secondary battery using an electrolyte solution and some secondary batteries using a solid electrolyte further comprise a separator. The separator is provided between the positive electrode plate and the negative electrode plate, and mainly prevents positive and negative electrodes from short-circuiting and enables the active ions to pass through. The type of the separator is not particularly limited in the present application, and any well known porous-structure separator with good chemical stability and mechanical stability may be selected.

In some embodiments, the material of the separator may comprise at least one of glass fibers, non-woven fabrics, polyethylene, polypropylene and polyvinylidene fluoride. The separator may be either a single-layer film or a multi-layer composite film. When the separator is a multi-layer composite film, the materials of the respective layers are the same or different.

In some embodiments, the positive electrode plate, the separator and the negative electrode plate can form an electrode assembly by a winding process or a lamination process.

In some embodiments, the secondary battery may comprise an outer package. The outer package can be used to encapsulate the above-mentioned electrode assembly and electrolyte.

In some embodiments, the outer package of the secondary battery may be a hard shell, for example, a hard plastic shell, an aluminum shell, a steel shell, etc. The outer package of the secondary battery may also be a soft bag, such as a pouch-type soft bag. The material of the soft bag may be plastics, such as at least one of polypropylene (PP), polybutylene terephthalate (PBT), polybutylene succinate (PBS), etc.

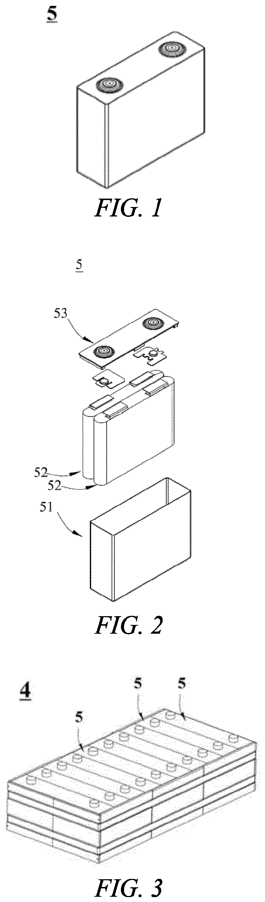

The shape of the secondary battery is not particularly limited in the present application, and may be cylindrical, square or of any other shape. Fig. 1 shows a square secondary battery 5 as an example.

In some embodiments, as shown in Fig. 2, the outer package may comprise a housing 51 and a cover plate 53. The housing 51 may include a bottom plate and side plates connected to the bottom plate, and the bottom plate and the side plates enclose to form an accommodating cavity. The housing 51 has an opening in communication with the accommodating cavity, and the cover plate 53 is used for covering the opening to close the accommodating cavity. The positive electrode plate, the negative electrode plate and the separator can be subjected to a winding process or a stacking process to form an electrode assembly 52. The electrode assembly 52 is packaged in the accommodating cavity. The electrolyte infiltrates the electrode assembly 52. The number of the electrode assemblies 52 contained in the secondary battery 5 may be one or more, and may be adjusted according to requirements.

The method for preparing the secondary battery of the present application are well-known. In some embodiments, the positive electrode plate, the separator, the negative electrode plate, and the electrolyte solution can be assembled to form a secondary battery. As an example, the positive electrode plate, the separator and the negative electrode plate can be made into an electrode assembly by a winding process or a lamination process, which is placed in an outer package, dried, then injected with an electrolyte solution, subjected to procedures of vacuum packaging, standing, forming, shaping, etc., to obtain a secondary battery.

In some embodiments of the present application, the secondary battery according to the present application can be assembled into a battery module, and the number of the secondary batteries contained in the battery module can be multiple, and the specific number can be adjusted according to the application and capacity of the battery module.

Fig. 3 shows a schematic diagram of a battery module 4 as an example. As shown in Fig.3, in the battery module 4, a plurality of secondary batteries 5 can be arranged in sequence along the longitudinal direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, and the number of the battery modules contained in the battery pack can be adjusted according to the application and capacity of the battery pack.

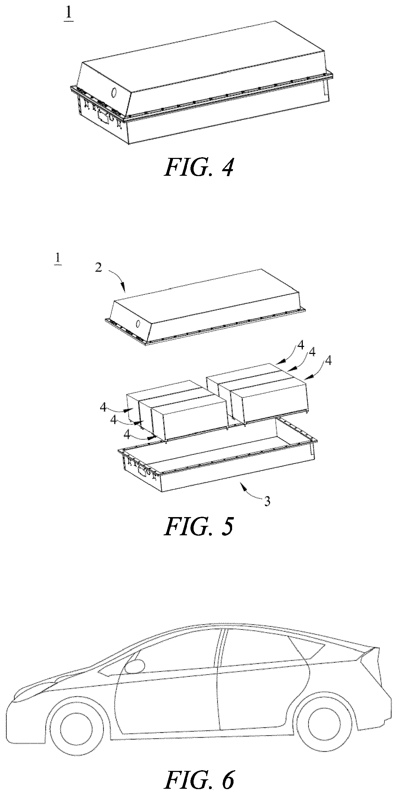

Fig. 4 and Fig. 5 show a schematic diagram of a battery module 1 as an example. As shown in Fig. 4 and Fig. 5, the battery pack 1 can include a battery box and a plurality of battery modules 4 arranged in the battery box. The battery case includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Power consuming device

A fifth aspect of the present application provides a power consuming device comprising at least one of a secondary battery, a battery module and a battery pack of the present application. The secondary battery, battery module or battery pack may be used as a power supply of the power consuming device or as an energy storage unit of the power consuming device. The power consuming device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship and satellite, an energy storage system, etc.

The power consuming device may incorporate the secondary battery, battery module or battery pack according to its usage requirements.

Fig. 6 shows a schematic diagram of a power consuming device as an example. The power consuming device may be a pure electric vehicle, a hybrid electric vehicle, a plug-in hybrid electric vehicle or the like. In order to meet the requirements of the power consuming device for a high power and a high energy density, a battery pack or a battery module may be used.

As another example, the power consuming device may be a mobile phone, a tablet, a laptop computer, etc. The power consuming device is generally required to be thin and light, and may use a secondary battery as a power supply.

### Examples

The following examples more specifically describe the content disclosed in the present application, and these examples are only used for explanatory description, because various modifications and transitions within the scope of the present disclosure are obvious to those skilled in the art. Unless otherwise noted, all parts, percentages, and ratios reported in the following examples are on a mass basis, and all reagents used in the examples are commercially available and used directly without further treatment, and the instruments used in the examples are commercially available.

### Example 1

### 1) Preparation of a positive electrode active material

Preparation of doped manganese oxalate: 1.3 mol of MnSO₄·H₂O and 0.7 mol of FeSO₄·H₂O were mixed thoroughly for 6 hours in a mixer. The mixture was transferred into a reaction kettle, and 10 L of deionized water and 2 mol of oxalic acid dihydrate (in oxalic acid) were added. The reaction kettle was heated to 80°C, stirring was performed for 6 hours at a rotation speed of 600 rpm, and the reaction was completed (no bubbles are generated), so as to obtain an Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

Preparation of inner core: 1 mol of the above manganese oxalate particles, 0.497 mol of lithium carbonate, 0.001 mol of Mo(SO₄)₃, an 85% aqueous phosphoric acid solution containing 0.999 mol of phosphoric acid, 0.001 mol of H₄SiO₄, 0.0005 mol of NH₄HF₂ and 0.005 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated Li_{0.994}Mo_{0.001}Mn_{0.65}Fe_{0.35}P_{0.999}Si_{0.001}O_{3.999}F_{0.001}, i.e., the inner core. The element content may be tested using inductively coupled plasma (ICP) emission spectroscopy.

Coating of the coating layer: Aminoethylaminopropyl polydimethylsiloxane was dissolved in xylene to form a coating solution, then the prepared inner core was added thereto and stirred evenly to form a mixed slurry, then the mixed slurry was placed in a wet coating machine, and dried under a nitrogen atmosphere at 120°C for 4 h, so as to obtain a positive electrode active material. The mass percentage content of the polar functional groups (i.e., - CH₂NH₂ and -CH₂NH-) of aminoethylaminopropyl polydimethylsiloxane was 12%, the number average molecular weight was 3700, and the coating amount was 1 wt%, based on the weight of the prepared inner core.

### 2) Preparation of button battery

The positive electrode active material described above, polyvinylidene fluoride (PVDF) and acetylene black at a weight ratio of 90 : 5 : 5 were added to N-methyl pyrrolidone (NMP), and stirred to produce a slurry in a drying room. An aluminum foil was coated with the above slurry, followed by drying and cold pressing, so as to obtain a positive electrode plate. The coating amount was 0.2 g/cm², and the compacted density was 2.0 g/cm³.

A lithium plate was used as the negative electrode, a solution of 1 mol/L LiPF₆ in ethylene carbonate (EC), diethyl carbonate (DEC) and dimethyl carbonate (DMC) at a volume ratio of 1 : 1 : 1 was used as an electrolyte solution, and the lithium plate and the electrolyte solution were assembled, together with the positive electrode plate prepared above, into a button battery in a button battery box.

### 3) Preparation of full battery

The positive electrode active material, the conductive agent acetylene black, and the binder polyvinylidene fluoride (PVDF) were uniformly mixed in an N-methylpyrrolidone solvent system at a weight ratio of 92 : 2.5 : 5.5, the mixture was then applied on an aluminum foil, and the aluminum foil was dried and cold pressed to obtain a positive electrode plate. The coating amount was 0.4 g/cm², and the compacted density was 2.4 g/cm³.

A negative electrode active material of synthetic graphite, hard carbon, a conductive agent of acetylene black, a binder of butadiene styrene rubber (SBR) and a thickening agent of sodium carboxymethyl cellulose (CMC) are dissolved at a weight ratio of 90 : 5 : 2 : 2 : 1 in deionized water, and the mixture was coated on a copper foil, dried and cold pressed to obtain a negative electrode plate. The coating amount was 0.2 g/cm², and the compacted density was 1.7 g/cm³.

With a polyethylene (PE) porous polymer film as a separator, the positive electrode plate, the separator and the negative electrode plate were stacked in sequence, such that the separator was located between the positive electrode and the negative electrode to play a role of isolation, and then winding was performed to obtain an electrode assembly. The electrode assembly was placed in an outer package, and the same electrolyte solution as that for the preparation of the button battery was injected, followed by encapsulation, so as to obtain a full battery.

### Example 2

Except that in "1) Preparation of positive electrode active material", the amount of Li₂CO₃ was changed to 0.4885 mol, Mo(SO₄)₃ was replaced by MgSO₄, the amount of FeSO₄·H₂O was changed to 0.68 mol, 0.02 mol of Ti(SO₄)₂ was also added in the preparation of doped manganese oxalate, and H₄SiO₄ was replaced by HNO₃, the process was the same as in example 1.

### Example 3

Except that in "1) Preparation of positive electrode active material", the amount of Li₂CO₃ was changed to 0.496 mol, Mo(SO₄)₃ was replaced by W(SO₄)₃, and H₄SiO₄ was replaced by H₂SO₄, the process was the same as in example 1.

### Example 4

Except that in "1) Preparation of positive electrode active material", the amount of Li₂CO₃ was changed to 0.4985 mol, 0.001 mol of Mo(SO₄)₃ was replaced by 0.0005 mol of Al₂(SO₄)₃, and NH₄HF₂ was replaced by NH₄HCl₂, the process was the same as in example 1.

### Example 5

Except that in "1) Preparation of positive electrode active material", the amount of FeSO₄·H₂O was changed to 0.69 mol, 0.01 mol of VCl₂ was also added in the preparation of doped manganese oxalate, the amount of Li₂CO₃ was changed to 0.4965 mol, 0.001 mol of Mo(SO₄)₃ was replaced by 0.0005 mol of Nb₂(SO₄)₅, and H₄SiO₄ was replaced by H₂SO₄, the process was the same as in example 1.

### Example 6

Except that in "1) Preparation of positive electrode active material", the amount of FeSO₄·H₂O was changed to 0.68 mol, 0.01 mol of VCl₂ and 0.01 mol of MgSO₄ were also added in the preparation of doped manganese oxalate, the amount of Li₂CO₃ was changed to 0.4965 mol, 0.001 mol of Mo(SO₄)₃ was replaced by 0.0005 mol of Nb₂(SO₄)₅, and H₄SiO₄ was replaced by H₂SO₄, the process was the same as in example 1.

### Example 7

Except that in "1) Preparation of positive electrode active material", MgSO₄ was replaced by CoSO₄, the process was the same as in example 6.

### Example 8

Except that in "1) Preparation of positive electrode active material", MgSO₄ was replaced by NiSO₄, the process was the same as in example 6.

### Example 9

Except that in "1) Preparation of positive electrode active material", the amount of FeSO₄·H₂O was changed to 0.698 mol, 0.002 mol of Ti(SO₄)₂ was also added in the preparation of doped manganese oxalate, the amount of Li₂CO₃ was changed to 0.4955 mol, 0.001 mol of Mo(SO₄)₃ was replaced by 0.0005 mol of Nb₂(SO₄)₅, H₄SiO₄ was replaced by H₂SO₄, and NH₄HF₂ was replaced by NH₄HCl₂, the process was the same as in example 1.

### Example 10

Except that in "1) Preparation of positive electrode active material", the amount of FeSO₄·H₂O was changed to 0.68 mol, 0.01 mol of VCl₂ and 0.01 mol of MgSO₄ were also added in the preparation of doped manganese oxalate, the amount of Li₂CO₃ was changed to 0.4975 mol, 0.001 mol of Mo(SO₄)₃ was replaced by 0.0005 mol of Nb₂(SO₄)₅, and NH₄HF₂ was replaced by NH₄HBr₂, the process was the same as in example 1.

### Example 11

Except that in "1) Preparation of positive electrode active material", the amount of FeSO₄·H₂O was changed to 0.69 mol, 0.01 mol of VCl₂ was also added in the preparation of doped manganese oxalate, the amount of Li₂CO₃ was changed to 0.499 mol, Mo(SO₄)₃ was replaced by MgSO₄, and NH₄HF₂ was replaced by NH₄HBr₂, the process was the same as in example 1.

### Example 12

Except that in "1) Preparation of positive electrode active material", the amount of MnSO₄·H₂O was changed to 1.36 mol, the amount of FeSO₄·H₂O was changed to 0.6 mol, 0.04 mol of VCl₂ was also added in the preparation of doped manganese oxalate, the amount of Li₂CO₃ was changed to 0.4985 mol, Mo(SO₄)₃ was replaced by MgSO₄, and H₄SiO₄ was replaced by HNO₃, the process was the same as in example 1.

### Example 13

Except that in "1) Preparation of positive electrode active material", the amount of MnSO₄·H₂O was changed to 1.16 mol, and the amount of FeSO₄·H₂O was changed to 0.8 mol, the process was the same as in example 12.

### Example 14

Except that in "1) Preparation of positive electrode active material", the amount of MnSO₄·H₂O was changed to 1.3 mol, and the amount of VCl₂ was changed to 0.1 mol, the process was the same as in example 12.

### Example 15

Except that in "1) Preparation of positive electrode active material", the amount of MnSO₄·H₂O was changed to 1.2 mol, 0.1 mol of VCl₂ was also added in the preparation of doped manganese oxalate, the amount of Li₂CO₃ was changed to 0.494 mol, 0.001 mol of Mo(SO₄)₃ was replaced by 0.005 mol of MgSO₄, and H₄SiO₄ was replaced by H₂SO₄, the process was the same as in example 1.

### Example 16

Except that in "1) Preparation of positive electrode active material", the amount of MnSO₄·H₂O was changed to 1.2 mol, 0.1 mol of VCl₂ was also added in the preparation of doped manganese oxalate, the amount of Li₂CO₃ was changed to 0.467 mol, 0.001 mol of Mo(SO₄)₃ was replaced by 0.005 mol of MgSO₄, 0.001 mol of H₄SiO₄ was replaced by 0.005 mol of H₂SO₄, and 1.175 mol of 85% phosphoric acid was replaced by 1.171 mol of 85% phosphoric acid, the process was the same as in example 1.

### Example 17

Except that in "1) Preparation of positive electrode active material", the amount of MnSO₄·H₂O was changed to 1.2 mol, 0.1 mol of VCl₂ was also added in the preparation of doped manganese oxalate, the amount of Li₂CO₃ was changed to 0.492 mol, 0.001 mol of Mo(SO₄)₃ was replaced by 0.005 mol of MgSO₄, H₄SiO₄ was replaced by H₂SO₄, and the amount of NH₄HF₂ was changed to 0.0025 mol, the process was the same as in example 1.

### Example 18

Except that in "1) Preparation of positive electrode active material", the amount of FeSO₄·H₂O was changed to 0.5 mol, 0.1 mol of VCl₂ and 0.1 mol of CoSO₄ were also added in the preparation of doped manganese oxalate, the amount of Li₂CO₃ was changed to 0.492 mol, 0.001 mol of Mo(SO₄)₃ was replaced by 0.005 mol of MgSO₄, H₄SiO₄ was replaced by H₂SO₄, and the amount of NH₄HF₂ was changed to 0.0025 mol, the process was the same as in example 1.

### Example 19

Except that in "1) Preparation of positive electrode active material", the amount of FeSO₄·H₂O was changed to 0.4 mol, and the amount of CoSO₄ was changed to 0.2 mol, the process was the same as in example 18.

### Example 20

Except that in "1) Preparation of positive electrode active material", the amount of MnSO₄·H₂O was changed to 1.5 mol, the amount of FeSO₄·H₂O was changed to 0.1 mol, and the amount of CoSO₄ was changed to 0.3 mol, the process was the same as in example 18.

### Example 21

Except that in "1) Preparation of positive electrode active material", 0.1 mol of CoSO₄ was replaced by 0.1 mol of NiSO₄, the process was the same as in example 18.

### Example 22

Except that in "1) Preparation of positive electrode active material", the amount of MnSO₄·H₂O was changed to 1.5 mol, the amount of FeSO₄·H₂O was changed to 0.2 mol, and 0.1 mol of CoSO₄ was replaced by 0.2 mol of NiSO₄, the process was the same as in example 18.

### Example 23

Except that in "1) Preparation of positive electrode active material", the amount of MnSO₄·H₂O was changed to 1.4 mol, the amount of FeSO₄·H₂O was changed to 0.3 mol, and the amount of CoSO₄ was changed to 0.2 mol, the process was the same as in example 18.

### Example 24

Except that in "1) Preparation of positive electrode active material", the amount of MnSO₄·H₂O was changed to 1.2 mol, the amount of FeSO₄·H₂O was changed to 0.5 mol, 0.1 mol of VCl₂ and 0.2 mol of CoSO₄ were also added in the preparation of doped manganese oxalate, the amount of Li₂CO₃ was changed to 0.497 mol, 0.001 mol of Mo(SO₄)₃ was replaced by 0.005 mol of MgSO₄, H₄SiO₄ was replaced by H₂SO₄, and the amount of NH₄HF₂ was changed to 0.0025 mol, the process was the same as in example 1.

### Example 25

Except that in "1) Preparation of positive electrode active material", the amount of MnSO₄·H₂O was changed to 1.0 mol, the amount of FeSO₄·H₂O was changed to 0.7 mol, and the amount of CoSO₄ was changed to 0.2 mol, the process was the same as in example 18.

### Example 26

Except that in "1) Preparation of positive electrode active material", the amount of MnSO₄·H₂O was changed to 1.4 mol, the amount of FeSO₄·H₂O was changed to 0.3 mol, 0.1 mol of VCl₂ and 0.2 mol of CoSO₄ were also added in the preparation of doped manganese oxalate, the amount of Li₂CO₃ was changed to 0.4825 mol, 0.001 mol of Mo(SO₄)₃ was replaced by 0.005 mol of MgSO₄, the amount of H₄SiO₄ was changed to 0.1 mol, the amount of phosphoric acid was changed to 0.9 mol, and the amount of NH₄HF₂ was changed to 0.04 mol, the process was the same as in example 1.

### Example 27

Except that in "1) Preparation of positive electrode active material", the amount of MnSO₄·H₂O was changed to 1.4 mol, the amount of FeSO₄·H₂O was changed to 0.3 mol, 0.1 mol of VCl₂ and 0.2 mol of CoSO₄ were also added in the preparation of doped manganese oxalate, the amount of Li₂CO₃ was changed to 0.485 mol, 0.001 mol of Mo(SO₄)₃ was replaced by 0.005 mol of MgSO₄, the amount of H₄SiO₄ was changed to 0.08 mol, the amount of phosphoric acid was changed to 0.92 mol, and the amount of NH₄HF₂ was changed to 0.05 mol, the process was the same as in example 1.

### Examples 28-38

Except that in "1) Preparation of positive electrode active material", aminoethylaminopropyl polydimethylsiloxane was respectively replaced by polymethyltrifluoropropylsiloxane (polar functional group being -CF₃ with a mass percentage content of 44% and the number averaged molecular weight being 1400), side-chain phosphate-grafted polydimethylsiloxane (polar functional group being phosphate group with a mass percentage content of 1.42% and the number averaged molecular weight being 15600), polymethylchloropropylsiloxane (polar functional group being -CH₂Cl with a mass percentage content of 30.2% and the number averaged molecular weight being 2500), polydimethylsiloxane (with a mass percentage content of polar functional groups of about 0% and a number averaged molecular weight being 1200), polyether-terminated polydimethylsiloxane (polar functional group being polyether segment with a mass percentage content of 10% and the number averaged molecular weight being 2110), polymethylvinylsiloxane (with a mass percentage content of polar functional groups of about 0% and a number averaged molecular weight of 2200), methoxy-terminated polydimethylsiloxane (polar functional group being methoxy group with a mass percentage content of 3.1% and the number averaged molecular weight being 2800), hydroxypropyl-terminated polydimethylsiloxane (polar functional group being -CH₂OH with a mass percentage content of 0.98% and the number averaged molecular weight being 6300), 1,3,5,7-octamethylcyclotetrasiloxane (with a mass percentage content of polar functional groups of about 0% and a molecular weight of 280), decamethylcyclopentasiloxane (with a mass percentage content of polar functional groups of about 0% and a molecular weight of 370), and polyether-terminated polydimethylsiloxane (polar functional group being polyether segment with a mass percentage content of 55% and the number averaged molecular weight being 25132), the process was the same as in example 1.

### Examples 39-44

Except that in "1) Preparation of positive electrode active material", the coating amount of aminoethylaminopropyl polydimethylsiloxane was respectively changed to 0.01 wt%, 0.1 wt%, 2 wt%, 5 wt%, 10 wt%, and 12 wt% (based on the weight of the inner core prepared), the process was the same as in example 1.

### Examples 45-51

Except that in "1) Preparation of positive electrode active material", aminoethylaminopropyl polydimethylsiloxane was respectively replaced by polydimethylsiloxanes having a number average molecular weight of 400, 10000, 50000, 80000, 100000, 300000, and 400000, the process was the same as in example 1.

### Comparative example 1

Preparation of manganese oxalate: 1 mol of MnSO₄·H₂O is added into a reaction kettle, and 10 L of deionized water and 1 mol of oxalic acid dihydrate (in oxalic acid) are added. The reaction kettle is heated to 80°C, stirring is performed for 6 hours at a rotation speed of 600 rpm, and the reaction is completed (no bubbles are generated), so as to obtain a manganese oxalate suspension. Then, the suspension was filtered, and the resultant filter cake was dried at 120°C and then ground, to obtain manganese oxalate particles with a median particle size Dv₅₀ of 50 to 200 nm.

Preparation of lithium manganese phosphate: 1 mol of the above manganese oxalate particles, 0.5 mol of lithium carbonate, an 85% aqueous phosphoric acid solution containing 1 mol of phosphoric acid, and 0.005 mol of sucrose are added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder is sintered at 700°C for 10 hours in a protective atmosphere of nitrogen (90 vol%) + hydrogen (10 vol%), so as to obtain carbon-coated LiMnPO₄.

### Comparative example 2

Except that in Comparative example 1, 1 mol of MnSO₄·H₂O was replaced by 0.85 mol of MnSO₄·H₂O and 0.15 mol of FeSO₄·H₂O, which were added into a mixer and thoroughly mixed for 6 hours before adding into a reaction kettle, the process was the same as in comparative example 1.

### Comparative example 3

Except that in "1) Preparation of positive electrode active material", no polymer coating layer was coated on the surface of the prepared inner core, the amount of MnSO₄·H₂O was changed to 1.9 mol, 0.7 mol of FeSO₄·H₂O was replaced by 0.1 mol of ZnSO₄, the amount of Li₂CO₃ was changed to 0.495 mol, 0.001 mol of Mo(SO₄)₃ was replaced by 0.005 mol of MgSO₄, the amount of phosphoric acid was changed to 1 mol, and neither H₄SiO₄ nor NH₄HF₂ is added, the process was the same as in example 1.

### Comparative example 4

Except that in "1) Preparation of positive electrode active material", no polymer coating layer was coated on the surface of the prepared inner core, the amount of MnSO₄·H₂O was changed to 1.2 mol, the amount of FeSO₄·H₂O was changed to 0.8 mol, the amount of Li₂CO₃ was changed to 0.45 mol, 0.001 mol of Mo(SO₄)₃ was replaced by 0.005 mol of Nb₂(SO₄)₅, the amount of phosphoric acid was changed to 1 mol, the amount of NH₄HF₂ was changed to 0.025 mol, and no H₄SiO₄ was added, the process was the same as in example 1.

### Comparative example 5

Except that in "1) Preparation of positive electrode active material", no polymer coating layer was coated on the surface of the prepared inner core, the amount of MnSO₄·H₂O was changed to 1.4 mol, the amount of FeSO₄·H₂O was changed to 0.6 mol, the amount of Li₂CO₃ was changed to 0.38 mol, and 0.001 mol of Mo(SO₄)₃ was replaced by 0.12 mol of MgSO₄, the process was the same as in example 1.

### Comparative example 6

Except that in "1) Preparation of positive electrode active material", no polymer coating layer was coated on the surface of the prepared inner core, the amount of MnSO₄·H₂O was changed to 0.8 mol, 0.7 mol of FeSO₄·H₂O was changed to 1.2 mol of ZnSO₄, the amount of Li₂CO₃ was changed to 0.499 mol, and 0.001 mol of Mo(SO₄)₃ was replaced by 0.001 mol of MgSO₄, the process was the same as in example 1.

### Comparative example 7

Except that in "1) Preparation of positive electrode active material", no polymer coating layer was coated on the surface of the prepared inner core, the amount of MnSO₄·H₂O was changed to 1.4 mol, the amount of FeSO₄·H₂O was changed to 0.6 mol, the amount of Li₂CO₃ was changed to 0.534 mol, 0.001 mol of Mo(SO₄)₃ was replaced by 0.001 mol of MgSO₄, the amount of phosphoric acid was changed to 0.88 mol, the amount of H₄SiO₄ was changed to 0.12 mol, and the amount of NH₄HF₂ was changed to 0.025 mol, the process was the same as in example 1.

### Comparative example 8

Except that in "1) Preparation of positive electrode active material", no polymer coating layer was coated on the surface of the prepared inner core, the amount of MnSO₄·H₂O was changed to 1.2 mol, the amount of FeSO₄·H₂O was changed to 0.8 mol, the amount of Li₂CO₃ was changed to 0.474 mol, 0.001 mol of Mo(SO₄)₃ was replaced by 0.001 mol of MgSO₄, the amount of phosphoric acid was changed to 0.93 mol, the amount of H₄SiO₄ was changed to 0.07 mol, and the amount of NH₄HF₂ was changed to 0.06 mol, the process was the same as in example 1.

### Comparative example 9

Except that in "1) Preparation of positive electrode active material", no polymer coating layer was coated on the surface of the prepared inner core, the process was the same as in example 1.

### Method for testing properties of positive electrode active material, positive electrode plate and battery

### 1. Method for measuring lattice change rate

In a constant-temperature environment at 25°C, a positive electrode active material sample was placed in X-ray diffractometer (model: Bruker D8 Discover) and tested at 1°/min, and the test data were organized and analyzed; and with reference to the standard PDF card, lattice constants a0, b0, c0 and v0 at this moment were calculated (a0, b0 and c0 represent the lengths of a unit cell in respective directions, and v0 represents the volume of the unit cell, which may be obtained directly from XRD refinement results).

By using the method for preparing a button battery in the above-mentioned examples, the positive electrode active material sample was made into a button battery, and the button battery was charged at a small rate of 0.05C until the current was reduced to 0.01C. Then a positive electrode plate in the button battery was taken out and soaked in DMC for 8 h. Then the positive electrode plate was dried, powder was scraped off, and particles with a particle size of less than 500 nm were screened out. Sampling was performed, and a lattice constant v1 was calculated in the same way as that for testing the fresh sample as described above. (v0 - v1)/v0 × 100% was shown in a table as a lattice change rate of the sample before and after complete lithium intercalation and de-intercalation.

### 2. Method for measuring Li/Mn antisite defect concentration

The XRD results determined in the "Method for measuring lattice change rate" were compared with the PDF (Powder Diffraction File) card of a standard crystal, so as to obtain a Li/Mn antisite defect concentration. Specifically, the XRD results determined in the "Method for measuring lattice change rate" were imported to a general structure analysis system (GSAS) software, and refinement results were obtained automatically, including the occupancies of different atoms; and a Li/Mn antisite defect concentration was obtained by reading the refinement results.

### 3. Method for measuring surface oxygen valence state

5 g of a positive electrode active material was made into a button battery according to the method for preparing a button battery in the above-mentioned examples. The button battery was charged at a small rate of 0.05C until the current was reduced to 0.01C. Then a positive electrode plate in the button battery was taken out and soaked in DMC for 8 h. Then the positive electrode plate was dried, powder was scraped off, and particles with a particle size of less than 500 nm were screened out. The obtained particles were measured with electron energy loss spectroscopy (EELS, instrument model used: Talos F200S), so as to obtain an energy loss near-edge structure (ELNES) which reflects the density of states and energy level distribution of an element. According to the density of states and energy level distribution, the number of occupied electrons was calculated by integrating the data of valence-band density of states, and then a valence state of surface oxygen after the charging was extrapolated.

### 4. Method for measuring compacted density

5 g sample powder of the positive electrode active material was put into a dedicated compaction mold (U.S. CARVER mold, model: 13 mm), and then the mold was placed on a compacted density instrument. A pressure of 3T (tons) was exerted, the thickness (after pressure relief, and the area of the container for test was 1540.25 mm²) of the powder under pressure was read from the instrument, and a compacted density was calculated through ρ = m/v.

### 5. Method for measuring dissolution of Mn (and Fe doping Mn position) after cycling

A full battery after cycling to 80% attenuated capacity at 45°C was discharged to a cutoff voltage of 2.0 V at a rate of 0.1C. Then the battery was disassembled, the negative electrode plate was taken out, a round piece of 30 unit areas (1540.25 mm²) was randomly taken from the negative electrode plate, and inductively coupled plasma (ICP) emission spectroscopy was performed with Agilent ICP-OES730. The amounts of Fe (if the Mn position of the positive electrode active material is doped with Fe) and Mn therein were calculated according to the ICP results, and then the dissolution of Mn (and Fe doping the Mn position) after cycling was calculated. The testing standard was in accordance with EPA-6010D-2014.

### 6. Measurement of contact angle

Ethylene carbonate (EC) was dropwise added to the surface of the positive electrode film layer at room temperature. An optic contact angle meter of type LSA 200 from LAUDA Scientific Company, Germany, was used to measure the solid-liquid contact angle within 60 seconds.

### 7. Measurement of porosity

By peeling the positive electrode film layer using an adhesive tape, the porosity of the positive electrode film layer was measured according to GB/T 24586-2009. Porosity P = [(V2 - V1)/V2] × 100%.

V1 (cm³) represents the actual volume, which can be measured by displacement method using an inert gas with a small molecular diameter (for example, helium) according to the combination of Archimedes' Principle and Bohr's law.

V2 (cm³) represents the apparent volume, with V2 = S × H × A, in which S (cm²) represents the area, H (cm) represents the thickness, and A represents the number of samples.

### 8. Method for measuring initial gram capacity of button battery

In a constant-temperature environment at 25°C, a button battery was charged at 0.1C to 4.3 V, then charged at a constant voltage of 4.3 V until the current was less than or equal to 0.05 mA, allowed to stand for 5 min, and then discharged at 0.1C to 2.0 V; and the discharge capacity at this moment was the initial gram capacity, marked as D0.

### 9. Method for measuring 3C charge constant current rate

In a constant-temperature environment at 25°C, a fresh full battery was allowed to stand for 5 min, and discharged at 1/3C to 2.5 V. The full battery was allowed to stand for 5 min, charged at 1/3C to 4.3 V, and then charged at a constant voltage of 4.3 V until the current was less than or equal to 0.05 mA. The full battery was allowed to stand for 5 min, and the charge capacity at this moment was recorded as C0. The full battery was discharged at 1/3C to 2.5 V, allowed to stand for 5 min, then charged at 3C to 4.3 V, and allowed to stand for 5 min, and the charge capacity at this moment was recorded as C1. The 3C charge constant current rate is C1/C0 × 100%.

A higher 3C charge constant current rate indicates a better rate performance of the battery.

### 10. Test of cycling performance of full battery at 45°C

In a constant-temperature environment at 45°C, a full battery was charged at 1C to 4.3 V, and then charged at a constant voltage of 4.3 V until the current was less than or equal to 0.05 mA. The full battery was allowed to stand for 5 min, and then discharged at 1C to 2.5V, and the discharge capacity at this moment was recorded as E0. The above-mentioned charge/discharge cycle was repeated until the discharge capacity was reduced to 80% of E0. The number of cycles experienced by the battery at this moment was recorded.

### 11. Test of expansion of full battery at 60°C

At 60°C, a full battery with 100% State of Charge (SOC) was stored. Before and after and during the storage, the open-circuit voltage (OCV) and AC internal impedance (IMP) of a battery were measured for monitoring the SOC, and the volume of the battery was measured. The full battery was taken out after every 48 h of storage, and allowed to stand for 1 h, then the OCV and internal IMP were measured, and the battery volume was measured with the displacement method after the full battery is cooled to room temperature. In the displacement method, the gravity F₁ of the battery was measured separately using a balance of which the on-board data was subjected to automatic unit conversion, then the battery was completely placed in deionized water (with a density known to be 1 g/cm³), the gravity F₂ of the cell at this moment was measured, the buoyancy F_{buoyancy} on the battery is F₁ - F₂, and then the battery volume V = (F₁ - F₂)/ (ρ × g) was calculated according to the Archimedes' principle Fbuoyancy = ρ × g × V_{displaced}.

From the test results of OCV and IMP, the battery of the example always maintained a SOC of no less than 99% in the testing process till the end of the storage.

After 30 days of storage, the battery volume was measured, and a percentage increase in battery volume after the storage relative to the battery volume before the storage was calculated.

### 12. Measurement of chemical formula of the inner core and composition of the coating layer

The internal microscopic structure and the surface structure of the positive electrode active material were characterized by Aberration Corrected Scanning Transmission Electron Microscope (ACSTEM) in high spatial resolution. The chemical formula of the inner core and the composition of the coating layer of the positive electrode active material were then obtained by means of a three-dimensional reconstruction technology.

Table 1 shows the composition of the positive electrode active materials of examples 1 to 11 and comparative examples 1 to 9.

Table 2 shows the composition of the positive electrode active materials of examples 12 to 27.

Table 3 shows the performance data of the positive electrode active materials, the positive electrode plates, the button batteries or the full batteries of examples 1 to 11 and comparative examples 1 to 9 obtained according to the above-mentioned performance testing methods.

Table 4 shows the performance data of the positive electrode active materials, the positive electrode plates, the button batteries or the full batteries of examples 12 to 27 obtained according to the above-mentioned performance testing methods.

**Table 1**

| No. | Inner core | Coating layer |
|---|---|---|
| Comparative example 1 | LiMnPO₄ | - |
| Comparative example 2 | LiMn_{0.85}Fe_{0.15}PO₄ | - |
| Comparative example 3 | Li_{0.990}Mg_{0.005}Mn_{0.95}Zn_{0.05}PO₄ | - |
| Comparative example 4 | Li_{0.90}Nb_{0.01}Mn_{0.6}Fe_{0.4}PO_{3.95}F_{0.05} | - |
| Comparative example 5 | Li_{0.76}Mg_{0.12}Mn_{0.7}Fe_{0.3}P_{0.999}Si_{0.001}O_{3.999}F_{0.001} | - |
| Comparative example 6 | Li_{0.998M}g_{0.001}Mn_{0.4}Zn_{0.6}P_{0.999}Si_{0.001}O_{3.999}F_{0.001} | - |
| Comparative example 7 | Li_{1.068}Mg_{0.001}Mn_{0.7}Fe₀.₃P_{0.88}Si_{0.12}O₃.₉₅F_{0.05} | - |
| Comparative example 8 | Li_{0.948}Mg_{0.001}Mn_{0.6}Fe_{0.4}P_{0.93}Si_{0.07}O_{3.88}F_{0.12} | - |

| Comparative example 9 | Li_{0.994}Mo_{0.001}Mn_{0.65}Fe_{0.35}P_{0.999}Si_{0.001}O_{3.999}F_{0.001} | - |
|---|---|---|
| Example 1 | Li_{0.994}Mo_{0.001}Mn_{0.65}Fe_{0.35}P_{0.999}Si_{0.001}O_{3.999}F_{0.001} | 1% of Aminoethylaminopropyl polydimethylsiloxane |
| Example 2 | Li_{0.977}Mg_{0.001}Mn_{0.65}Fe_{0.34}Ti_{0.01}P_{0.999}N_{0.001}O_{3.999}F_{0.001} | 1% of Aminoethylaminopropyl polydimethylsiloxane |
| Example 3 | Li_{0.992}W_{0.001}Mn_{0.65}Fe_{0.35}P_{0.999}S_{0.001}O_{3.999}F_{0.001} | 1% of Aminoethylaminopropyl polydimethylsiloxane |
| Example 4 | Li_{0.997}Al_{0.001}Mn_{0.65}Fe_{0.35}P_{0.999}Si_{0.001}O_{3.999}Cl_{0.001} | 1% of Aminoethylaminopropyl polydimethylsiloxane |
| Example 5 | Li_{0.993}Nb_{0.001}Mn_{0.65}Fe_{0.345}V_{0.005}P_{0.999}S_{0.001}O_{3.999}F_{0.001} | 1% of Aminoethylaminopropyl polydimethylsiloxane |
| Example 6 | Li_{0.993}Nb_{0.001}Mn_{0.65}Fe_{0.34}V_{0.005}Mg_{0.005}P_{0.999}S_{0.001}O_{3.999}F_{0.001} | 1% of Aminoethylaminopropyl polydimethylsiloxane |
| Example 7 | Li_{0.993}Nb_{0.001}Mn_{0.65}Fe_{0.34}V_{0.005}Co_{0.005}P_{0.999}S_{0.001}O_{3.999}F_{0.001} | 1% of Aminoethylaminopropyl polydimethylsiloxane |
| Example 8 | Li_{0.993}Nb_{0.001}Mn_{0.65}Fe_{0.34}V_{0.005}Ni_{0.005}P_{0.999}S_{0.001}O_{3.999}F_{0.001} | 1% of Aminoethylaminopropyl polydimethylsiloxane |
| Example 9 | Li_{0.991}Nb_{0.001}Mn_{0.65}Fe_{0.349}Ti_{0.001}P_{0.999}S_{0.001}O_{3.999}Cl_{0.001} | 1% of Aminoethylaminopropyl polydimethylsiloxane |
| Example 10 | Li_{0.995}Nb_{0.001}Mn_{0.65}Fe_{0.34}V_{0.005}Mg_{0.005}P_{0.999}Si_{0.001}O_{3.999}Br_{0.001} | 1% of Aminoethylaminopropyl polydimethylsiloxane |
| Example 11 | Li_{0.998}Mg_{0.001}Mn_{0.65}Fe_{0.345}V_{0.005}P_{0.999}Si_{0.001}O_{3.999}Br_{0.001} | 1% of Aminoethylaminopropyl polydimethylsiloxane |

**Table 2**

| No. | Inner core | (1-y) : y | a : x | Coating layer |
|---|---|---|---|---|
| Example 12 | Li_{0.997}Mg_{0.001}Mn_{0.68}Fe_{0.3}V_{0.02}P_{0.999}N_{0.001}O_{3.999}F_{0.001} | 2.13 | 997 | 1% of Aminoethylaminopropyl polydimethylsiloxane |
| Example 13 | Li_{0.997}Mg_{0.001}Mn_{0.58}Fe_{0.4}V_{0.02}P_{0.999}N_{0.001}O_{3.999}F_{0.001} | 1.38 | 997 | 1% of Aminoethylaminopropyl polydimethylsiloxane |
| Example 14 | Li_{0.997}Mg_{0.001}Mn_{0.65}Fe_{0.3}V_{0.05}P_{0.999}N_{0.001}O_{3.999}F_{0.001} | 1.86 | 997 | 1% of Aminoethylaminopropyl polydimethylsiloxane |
| Example 15 | Li_{0.988}Mg_{0.005}Mn_{0.6}Fe_{0.35}V_{0.05}P_{0.999}S_{0.001}O_{3.999}F_{0.001} | 1.50 | 197.6 | 1% of Aminoethylaminopropyl polydimethylsiloxane |
| Example 16 | Li_{0.984}Mg_{0.005}Mn_{0.6}Fe_{0.35}V_{0.05}P_{0.995}S_{0.005}O_{3.999}F_{0.001} | 1.50 | 196.8 | 1% of Aminoethylaminopropyl polydimethylsiloxane |
| Example 17 | Li_{0.984}Mg_{0.005}Mn_{0.6}Fe_{0.35}V_{0.05}P_{0.999}S_{0.001}O_{3.995}F_{0.005} | 1.50 | 196.8 | 1% of Aminoethylaminopropyl polydimethylsiloxane |
| Example 18 | Li_{0.984}Mg_{0.005}Mn_{0.65}Fe_{0.25}V_{0.05}Co_{0.05}P_{0.999}S_{0.001}O_{3.995}F_{0.005} | 1.86 | 196.8 | 1% of Aminoethylaminopropyl polydimethylsiloxane |
| Example 19 | Li_{0.984}Mg_{0.005}Mn_{0.65}Fe_{0.20}V_{0.05}Co_{0.10}P_{0.999}S_{0.001}O_{3.995}F_{0.005} | 1.86 | 196.8 | 1% of Aminoethylaminopropyl polydimethylsiloxane |
| Example 20 | Li_{0.984}Mg_{0.005}Mn_{0.75}Fe_{0.05}V_{0.05}Co_{0.15}P_{0.999}S_{0.001}O_{3.995}F_{0.005} | 3.00 | 196.8 | 1% of Aminoethylaminopropyl polydimethylsiloxane |
| Example 21 | Li_{0.984}Mg_{0.005}Mn_{0.65}Fe_{0.25}V_{0.05}Ni_{0.05}P_{0.999}S_{0.001}O_{3.995}F_{0.005} | 1.86 | 196.8 | 1% of Aminoethylaminopropyl polydimethylsiloxane |
| Example 22 | Li_{0.984}Mg_{0.005}Mn_{0.75}Fe_{0.10}V_{0.05}Ni_{0.10}P_{0.999}S_{0.001}O_{3.995}F_{0.005} | 3.00 | 196.8 | 1% of Aminoethylaminopropyl polydimethylsiloxane |
| Example 23 | Li_{0.984}Mg_{0.005}Mn_{0.7}Fe_{0.15}V_{0.05}Co_{0.10}P_{0.999}S_{0.001}O_{3.995}F_{0.005} | 2.33 | 196.8 | 1% of Aminoethylaminopropyl polydimethylsiloxane |
| Example 24 | Li_{0.984}Mg_{0.005}Mn_{0.6}Fe_{0.25}V_{0.05}Co_{0.10}P_{0.999}S_{0.001}O_{3.995}F_{0.005} | 1.50 | 196.8 | 1% of Aminoethylaminopropyl polydimethylsiloxane |
| Example 25 | Li_{0.984}Mg_{0.005}Mn_{0.5}Fe_{0.35}V_{0.05}Co_{0.10}P_{0.999}S_{0.001}O_{3.995}F_{0.005} | 1.00 | 196.8 | 1% of Aminoethylaminopropyl polydimethylsiloxane |
| Example 26 | Li_{1.01}Mg_{0.005}Mn_{0.7}Fe_{0.15}V_{0.05}Co_{0.10}P_{0.9}Si_{0.1}O_{3.92}F_{0.08} | 2.33 | 202 | 1% of Aminoethylaminopropyl polydimethylsiloxane |
| Example 27 | Li_{0.97}Mg_{0.005}Mn_{0.7}Fe_{0.15}V_{0.05}Co_{0.10}P_{0.92}Si_{0.08}O_{3.9}F_{0.1} | 2.33 | 194 | 1% of Aminoethylaminopropyl polydimethylsiloxane |

**Table 3**

| No. | Lattice change rate (%) | Li/Mn anti site defect concentration (%) | Surface oxygen valence state | Compacted density (g/cm³) | Dissolution of Mn and Fe after cycling (ppm) | Contact angle (°) | Porosity (%) | Initial gram capacity of button battery (mAh/g) | 3C charge constant current rate (%) | Number of cycles for capacity retention rate of 80% at 45°C | Expansion rate of battery when stored at 60°C (%) |
|---|---|---|---|---|---|---|---|---|---|---|---|
| Comparative example 1 | 11.4 | 5.2 | -1.55 | 1.7 | 2060 | 0 | 33.6 | 125.6 | 50.1 | 121 | 48.6 |
| Comparative example 2 | 10.6 | 4.3 | -1.51 | 1.87 | 1510 | 0 | 307 | 126.4 | 50.4 | 129 | 37.3 |
| Comparative example 3 | 10.8 | 3.6 | -1.64 | 1.88 | 1028 | 0 | 30.1 | 134.7 | 51.7 | 134 | 31.9 |
| Comparative example 4 | 9.7 | 2.4 | -1.71 | 1.93 | 980 | 1 | 29.6 | 141.3 | 62.3 | 148 | 30.8 |
| Comparative example 5 | 5.6 | 1.8 | -1.81 | 1.98 | 873 | 0 | 29.2 | 110.8 | 50.2 | 387 | 21.4 |
| Comparative example 6 | 3.7 | 1.5 | -1.8 | 201 | 574 | 1 | 28 | 74.3 | 658 | 469 | 158 |
| Comparative example 7 | 7.8 | 1.5 | -1.75 | 205 | 447 | 0 | 27.9 | 139.4 | 643 | 396 | 18.3 |
| Comparative example 8 | 8.4 | 1.4 | -1.79 | 216 | 263 | 1 | 26.2 | 141.7 | 63.9 | 407 | 22.7 |
| Comparative example 9 | 6.3 | 1.2 | -1.82 | 2.21 | 192 | 1 | 23.4 | 156.2 | 68.1 | 552 | 8.4 |
| Example 1 | 6.3 | 1.1 | -1.82 | 2.22 | 72 | 16.8 | 24.1 | 156.3 | 68 | 728 | 8 |
| Example 2 | 6.8 | 1.1 | -1.85 | 2.25 | 53 | 17.3 | 23.5 | 153.1 | 75.1 | 755 | 73 |
| Example 3 | 6.4 | 0.9 | -1.86 | 2.31 | 42 | 16 | 22.9 | 154.5 | 76.7 | 835 | 8.7 |
| Example 4 | 5.5 | 0.9 | -1.89 | 2.38 | 31 | 16.9 | 222 | 153.5 | 78.4 | 820 | 8.2 |
| Example 5 | 5.3 | 0.7 | -1.98 | 2.45 | 29 | 17.2 | 21.6 | 153.6 | 84.5 | 939 | 7.6 |
| Example 6 | 2.4 | 0.7 | -1.95 | 2.47 | 18 | 161 | 21 | 157.1 | 92.5 | 910 | 6.3 |
| Example 7 | 2.2 | 0.6 | -1.96 | 2.49 | 16 | 15.8 | 20.9 | 158.2 | 94.8 | 1050 | 6.3 |
| Example 8 | 3.4 | 0.5 | -1.98 | 2.51 | 15 | 16.3 | 19 | 157.3 | 93.8 | 902 | 6.4 |
| Example 9 | 3.8 | 0.5 | -1.96 | 2.45 | 19 | 17.1 | 21.5 | 146.9 | 903 | 851 | 6.2 |
| Example 10 | 4 | 0.6 | -1.97 | 2.46 | 36 | 16.2 | 21.1 | 155.9 | 91.2 | 810 | 65 |
| Example 11 | 3.6 | 0.7 | -1.95 | 2.46 | 42 | 16 | 21.3 | 155.9 | 92.6 | 771 | 6.4 |

**Table 4**

| No. | Lattice change rate (%) | Li/Mn antisite defect concentration (%) | Surface oxygen valence state | Compacted density (g/cm³) | Dissolution of Mn and Fe after cycling (ppm) | Contact angle (°) | Porosit y (%) | Initial gram capacity of button battery (mAh/g) | 3C charge constant current rate (%) | Number of cycles for capacity retention rate of 80% at 45°C | Expansion rate of battery when stored at 60°C (%) |
|---|---|---|---|---|---|---|---|---|---|---|---|
| Example 12 | 7.4 | 0.5 | -1.96 | 2.45 | 21 | 17.1 | 21.6 | 153.6 | 97.2 | 1124 | 6.6 |
| Example 13 | 7.6 | 0.4 | -1.98 | 2.48 | 16 | 16.2 | 20.9 | 157.5 | 85.1 | 1128 | 7.8 |
| Example 14 | 7.8 | 0.6 | -1.95 | 2.47 | 15 | 15.9 | 21 | 155.2 | 85.2 | 1240 | 6.9 |
| Example 15 | 6.4 | 0.5 | -1.97 | 2.49 | 16 | 16.3 | 20.7 | 156.7 | 82.1 | 1119 | 7.5 |
| Example 16 | 5.4 | 0.7 | -1.94 | 2.44 | 17 | 17.5 | 21.9 | 156.6 | 87.3 | 1111 | 8.4 |
| Example 17 | 4.2 | 0.6 | -1.98 | 2.42 | 14 | 16.3 | 22.3 | 156.3 | 92.1 | 1095 | 7.4 |
| Example 18 | 2.5 | 0.4 | -1.96 | 2.46 | 13 | 16.5 | 21.1 | 157.6 | 94 | 1255 | 6.2 |
| Example 19 | 2.4 | 0.4 | -1.97 | 2.47 | 14 | 15.9 | 20.8 | 156.9 | 94.4 | 1260 | 6.8 |
| Example 20 | 2.6 | 0.4 | -1.95 | 2.45 | 13 | 16.4 | 21.7 | 154.3 | 93.7 | 1160 | 7.1 |
| Example 21 | 3.3 | 0.5 | -1.93 | 2.46 | 15 | 17.2 | 21 | 155.9 | 91.5 | 1170 | 6.3 |
| Example 22 | 3.1 | 0.5 | -1.95 | 2.46 | 12 | 17.5 | 21.3 | 157.1 | 91.6 | 1140 | 6.3 |
| Example 23 | 2.8 | 0.6 | -1.96 | 2.44 | 10 | 16.7 | 21.9 | 151.6 | 84.4 | 1039 | 5.9 |
| Example 24 | 2.5 | 0.5 | -1.97 | 2.45 | 11 | 17 | 21.5 | 152.5 | 90.2 | 1155 | 5.6 |
| Example 25 | 2.2 | 0.4 | -1.98 | 2.46 | 9 | 15.9 | 21.1 | 153 | 92.2 | 1160 | 5.1 |
| Example 26 | 3.4 | 0.6 | -1.95 | 2.25 | 5 | 16 | 23.7 | 147.8 | 92.5 | 1154 | 9.2 |
| Example 27 | 2.7 | 0.5 | -1.98 | 2.28 | 8 | 16.3 | 23.3 | 145.4 | 91.8 | 1115 | 10.4 |

It can be seen from Tables 3 and 4 above that, the positive electrode active materials of the examples of the present application all achieve a better effect than the comparative examples in one or even all terms of cycling performance, high-temperature stability, gram capacity and compacted density. By doping LiMnPO₄ at Li, Mn, P and O positions with specific amounts of specific elements, improved rate performance can be obtained while the dissolution of Mn and Fe is reduced, thereby obtaining improved cycling performance and/or high-temperature stability; and the gram capacity and compacted density of the positive electrode active material can also be enhanced. The presence of the coating layer can further alleviate the aggression of the electrolyte solution on the surface of the positive electrode active material, reduce the dissolution of Mn and Fe after cycles, and significantly improve the cycling performance of the battery.

Through comparison between examples 18 to 20 and 23 to 25, it can be seen that in the case of the same rest elements, when (1-y) : y is in a range of 1 to 4, the energy density and the cycling performance of the battery can be further improved.

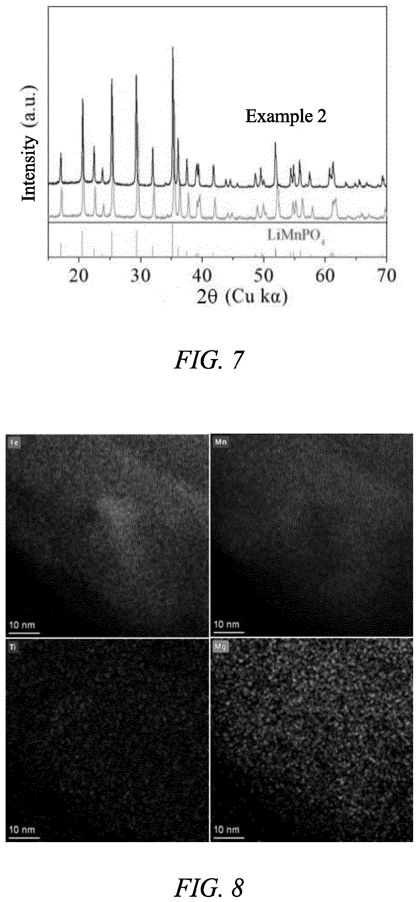

Fig. 7 shows an X-ray diffraction (XRD) pattern of the inner core of undoped LiMnPO₄ and a positive electrode active material prepared in example 2. It can be seen from the figure that, the position of main characteristic peaks in the XRD pattern of the inner core of the positive electrode active material of example 2 is consistent with those of the undoped LiMnPO₄, indicating that no impurity phase is introduced in the doping process, and an improvement in performance is mainly attributed to the doping with elements, rather than an impurity phase. Fig. 8 shows an energy-dispersive X-ray spectroscopy (EDS) diagram of the inner core of a positive electrode active material prepared in example 2. Those in spotted distribution in the figure are the doping elements. It can be seen from the figure that in the inner core of the positive electrode active material of example 2, the doping with elements is uniform.

Table 5 shows the composition of the coating layer of the positive electrode active materials of examples 28 to 51. Table 6 shows the performance data of the positive electrode active materials, the positive electrode plates, the button batteries or the full batteries of examples 28 to 51 obtained according to the above-mentioned performance testing methods.

**Table 5**

| No. | Coating layer | | | |
|---|---|---|---|---|
| | Polymer | Polar functional groups content α | Number average molecular weight | Coating amount |
| Example 1 | Aminoethylaminopropyl polydimethylsiloxane | 12% | 3700 | 1% |
| Example 28 | Polymethyl trifluoropropylsiloxane | 44% | 1400 | 1% |
| Example 29 | Side-chain phosphate-grafted polydimethylsiloxane | 1.42% | 15600 | 1% |
| Example 30 | Polymethylchloropropylsiloxane | 30.2% | 2500 | 1% |
| Example 31 | Polydimethylsiloxane | 0% | 1200 | 1% |
| Example 32 | Polyether-terminated polydimethylsiloxane | 10% | 2110 | 1% |
| Example 33 | Polymethylvinylsiloxane | 0% | 2200 | 1% |
| Example 34 | Methoxy-terminated polydimethylsiloxane | 3.1% | 2800 | 1% |
| Example 35 | Hydroxypropyl-terminated polydimethylsiloxane | 0.98% | 6300 | 1% |
| Example 36 | 1,3,5,7-Octamethylcyclotetrasiloxane | 0% | 280 | 1% |
| Example 37 | Decamethylcyclopentasiloxane | 0% | 370 | 1% |
| Example 38 | Polyether-terminated polydimethylsiloxane | 55% | 25312 | 1% |
| Example 39 | Aminoethylaminopropyl polydimethylsiloxane | 12% | 3700 | 0.01% |
| Example 40 | Aminoethylaminopropyl polydimethylsiloxane | 12% | 3700 | 0.1% |
| Example 41 | Aminoethylaminopropyl polydimethylsiloxane | 12% | 3700 | 2% |
| Example 42 | Aminoethylaminopropyl polydimethylsiloxane | 12% | 3700 | 5% |
| Example 43 | Aminoethylaminopropyl polydimethylsiloxane | 12% | 3700 | 10% |
| Example 44 | Aminoethylaminopropyl polydimethylsiloxane | 12% | 3700 | 12% |
| Example 45 | Polydimethylsiloxane | 0% | 400 | 1% |
| Example 46 | Polydimethylsiloxane | 0% | 10000 | 1% |
| Example 47 | Polydimethylsiloxane | 0% | 50000 | 1% |
| Example 48 | Polydimethylsiloxane | 0% | 80000 | 1% |
| Example 49 | Polydimethylsiloxane | 0% | 100000 | 1% |
| Example 50 | Polydimethylsiloxane | 0% | 300000 | 1% |
| Example 51 | Polydimethylsiloxane | 0% | 400000 | 1% |

**Table 6**

| No. | Lattice change rate (%) | Li/Mn antisite defect concentration (%) | Surface oxygen valence state | Compacted density (g/cm³) | Dissolution of Mn and Fe after cycling (ppm) | Contact angle (°) | Porosity (%) | Initial gram capacity of button battery (mAh/g) | 3C charge constant current rate (%) | Number of cycles for capacity retention rate of 80% at 45°C | Expansion rate of battery when stored at 60°C (%) |
|---|---|---|---|---|---|---|---|---|---|---|---|
| Example 1 | 6.3 | 1.1 | -1.82 | 2.22 | 72 | 16.8 | 24.1 | 156.3 | 68 | 728 | 8 |
| Example 28 | 6.2 | 1.1 | -1.82 | 2.21 | 85 | 23.5 | 27.3 | 156 | 68.2 | 698 | 8.4 |
| Example 29 | 6.3 | 1.2 | -1.82 | 2.23 | 79 | 17.5 | 25.2 | 155.9 | 68.3 | 710 | 8.4 |
| Example 30 | 6.4 | 1.2 | -1.82 | 2.2 | 93 | 18 | 26.3 | 156.2 | 68.1 | 687 | 8.2 |
| Example 31 | 6.3 | 1.3 | -1.82 | 2.21 | 105 | 19.8 | 27.1 | 156.3 | 68.5 | 660 | 8.1 |
| Example 32 | 6.2 | 1.2 | -1.82 | 2.23 | 81 | 17 | 25.4 | 156.1 | 68.3 | 703 | 8.4 |
| Example 33 | 6.3 | 1.3 | -1.82 | 2.2 | 103 | 20.1 | 27.4 | 155.9 | 68.3 | 668 | 8.3 |
| Example 34 | 6.4 | 1.2 | -1.82 | 2.22 | 99 | 18.2 | 26.1 | 156.1 | 68.2 | 676 | 8.4 |
| Example 35 | 6.4 | 1.2 | -1.82 | 2.22 | 100 | 17.8 | 26.3 | 156.2 | 68 | 670 | 8.1 |
| Example 36 | 6.3 | 1.1 | -1.82 | 2.2 | 118 | 15.9 | 26.9 | 156 | 68.4 | 635 | 8.4 |
| Example 37 | 6.3 | 1.2 | -1.82 | 2.24 | 117 | 16.2 | 25.4 | 156.1 | 68.6 | 641 | 8.4 |
| Example 38 | 6.2 | 1.1 | -1.82 | 2.26 | 139 | 2 | 24.4 | 155.8 | 68 | 610 | 8.1 |
| Example 39 | 6.3 | 1.2 | -1.82 | 2.21 | 185 | 5 | 23.4 | 156.2 | 68.1 | 565 | 8.1 |
| Example 40 | 6.2 | 1.3 | -1.82 | 2.23 | 126 | 9.3 | 23.5 | 156.5 | 68.2 | 631 | 8.1 |
| Example 41 | 6.1 | 1.3 | -1.82 | 2.21 | 70 | 18.1 | 24.9 | 155.9 | 68.1 | 719 | 8.2 |
| Example 42 | 6.3 | 1.1 | -1.82 | 2.22 | 71 | 19.3 | 26.1 | 154.8 | 67.1 | 683 | 8.1 |
| Example 43 | 6.2 | 1.2 | -1.82 | 2.21 | 68 | 21.6 | 27 | 153.9 | 66.8 | 642 | 8.1 |
| Example 44 | 6 | 1.3 | -1.82 | 2.22 | 62 | 24.9 | 29.2 | 153 | 65.9 | 622 | 8.3 |
| Example 45 | 6.3 | 1.2 | -1.82 | 2.21 | 107 | 19.1 | 26.9 | 156.2 | 68.0 | 643 | 8.3 |
| Example 46 | 6.2 | 1.1 | -1.82 | 2.22 | 105 | 20.9 | 27.9 | 156.5 | 68.2 | 655 | 8 |
| Example 47 | 6.1 | 1.2 | -1.82 | 2.23 | 104 | 21.5 | 28.1 | 156.3 | 68.1 | 648 | 8 |
| Example 48 | 6.1 | 1.3 | -1.82 | 2.22 | 101 | 21.8 | 28.6 | 155.8 | 68.3 | 640 | 8.2 |
| Example 49 | 6.3 | 1.2 | -1.82 | 2.23 | 100 | 22.9 | 30.1 | 155.1 | 67.5 | 622 | 8.1 |
| Example 50 | 6.2 | 1.1 | -1.82 | 2.21 | 97 | 23.8 | 31.8 | 154.4 | 67 | 609 | 8.1 |
| Example 51 | 6.3 | 1.3 | -1.82 | 2.2 | 93 | 25.2 | 33.6 | 153.9 | 66 | 593 | 8.3 |

It can be seen from Table 6 above that, when the other elements are the same, the selection of polysiloxanes having one or more of the suitable content of polar functional groups, the suitable number average molecular weight and the suitable coating amount as the coating layer can further improve the cycling performance and/or high-temperature stability of the secondary battery, without affecting the energy density and the dynamic performance.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A positive electrode active material with a core-shell structure, which includes an inner core and a coating layer coating at least part of the inner core, wherein
the inner core has a chemical formula of LiₐAₓMn_{1-y}B_{y}P_{1-z}C_{z}C₄₋ₙDₙ, in which A includes one or more elements selected from Zn, Al, Na, K, Mg, Nb, Mo and W, B includes one or more elements selected from Ti, V, Zr, Fe, Ni, Mg, Co, Ga, Sn, Sb, Nb and Ge, C includes one or more elements selected from B (boron), S, Si and N, and D includes one or more elements selected from S, F, Cl and Br, and a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; the inner core is electrically neutral; and
the coating layer comprises a polymer which comprises one or more selected from polysiloxanes with a linear structure and polysiloxanes with a ring structure.

2. The positive electrode active material according to claim 1, wherein the polymer comprises at least one of the structure unit shown in formula 1, 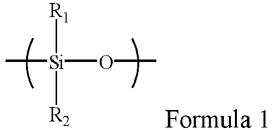
wherein R₁ and R₂ each independently represent H or at least one selected from the group consisting of the following functional groups: -COOH, -OH, -SH, -CN, -SCN, an amino, a phosphate group, a carboxylate group, an amido, an aldehyde group, a sulfonyl, a polyether segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group and a C2-C20 halogenated heteroaromatic hydrocarbon group; and
Optionally R₁ and R₂ each independently represent H or at least one selected from the group consisting of the following functional groups: an amino group, a phosphate group, a polyether segment, a C1-C8 alkyl, a C1-C8 haloalkyl, a C1-C8 heteroalkyl, a C1-C8 halogenated heteroalkyl, a C2-C8 alkenyl and a C2-C8 haloalkenyl group.

3. The positive electrode active material according to claim 1 or 2, wherein the polysiloxanes with a linear structure comprises a capping group, and
optionally, the capping group includes at least one selected from the group consisting of the following functional groups: a polyether, a C1-C8 alkyl, a C1-C8 haloalkyl, a C1-C8 heteroalkyl, a C1-C8 halogenated heteroalkyl, a C2-C8 alkenyl, a C2-C8 haloalkenyl, a C6-C20 aromatic hydrocarbon group, a C1-C8 alkoxy, a C2-C8 epoxy group, a hydroxyl, a C1-C8 hydroxyalkyl, an amino, a C1-C8 aminoalkyl, a carboxyl, and a C1-C8 carboxyalkyl.

4. The positive electrode active material according to any one of claims 1 to 3, wherein
the polysiloxanes with a linear structure includes one or more of polydimethylsiloxane, polydiethylsiloxane, polymethylethylsiloxane, polymethylvinylsiloxane, polyphenylmethylsiloxane, polymethylhydrogensiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxyl-terminated polydimethylsiloxane, polymethyltrifluoropropylsiloxane, perfluorooctylmethylpolysiloxane, aminoethylaminopropyl polydimethylsiloxane, polyether-terminated polydimethylsiloxane, side-chain aminopropyl polysiloxane, aminopropyl-terminated polydimethylsiloxane, side-chain phosphate-grafted polydimethylsiloxane, and side-chain polyether-grafted polydimethylsiloxane, and optionally includes one or more of polymethyltrifluoropropylsiloxane, aminoethylaminopropyl polydimethylsiloxane, side-chain phosphate-grafted polydimethylsiloxane, polymethylchloropropylsiloxane and polydimethylsiloxane; and/or
the polysiloxanes with a ring structure includes one or more of 1,3,5,7-octamethylcyclotetrasiloxane, 1,3,5,7-tetrahydro-1,3,5,7-tetramethylcyclotetrasiloxane, decamethylcyclopentasiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecylmethylcyclooctasiloxane, tetradecamethylcycloheptasiloxane, and cyclopolydimethylsiloxane.

5. The positive electrode active material according to any one of claims 1 to 4, wherein the polymer is selected from the polysiloxanes with a linear structure.

6. The positive electrode active material according to any one of claims 1 to 5, wherein the number average molecular weight of the polymer is 300000 or less, and optionally between 400 and 80000.

7. The positive electrode active material according to any one of claims 1 to 6, wherein the polysiloxane has a polar functional group mass content percentage of α, with 0 ≤ α < 50%, and optionally 5% ≤ α ≤ 30%.

8. The positive electrode active material according to any one of claims 1 to 7, wherein the coating amount of the coating layer is 0.01 wt% to 10 wt%, optionally 0.1 wt% to 5 wt%, and further 0.1 wt% to 2 wt%, based on the weight of the inner core.

9. The positive electrode active material according to any one of claims 1 to 8, wherein the positive electrode active material further comprises a carbon layer between the inner core and the coating layer.

10. The positive electrode active material according to any one of claims 1 to 9, wherein A, C and D are each independently any one element in their respective ranges above, and B is at least two elements in its range;
and optionally,
A is any element selected from Mg and Nb, and/or,
B is at least two elements selected from Fe, Ti, V, Co and Mg, and optionally Fe and one or more elements selected from Ti, V, Co and Mg, and/or
C is S, and/or,
D is F.

11. The positive electrode active material according to any one of claims 1 to 10, wherein x is selected from a range of 0.001 to 0.005; and/or, y is selected from a range of 0.01 to 0.5, and optionally a range of 0.25 to 0.5; and/or, z is selected from a range of 0.001 to 0.005; and/or, n is selected from a range of 0.001 to 0.005.

12. The positive electrode active material according to any one of claims 1 to 11, wherein (1-y) : y is in a range of 1 to 4, and optionally a range of 1.5 to 3, and a : x is in a range of 9 to 1100, and optionally a range of 190 to 998.

13. The positive electrode active material according to any one of claims 1 to 12, wherein the positive electrode active material satisfies at least one of the following conditions (1) to (4):
(1) the lattice change rate of the positive electrode active material is 8% or less, and optionally 4% or less;
(2) the Li/Mn antisite defect concentration of the positive electrode active material is 2% or less, and optionally 0.5% or less;
(3) the surface oxygen valence state of the positive electrode active material is -1.82 or less, and optionally -1.89 to -1.98; and
(4) the compacted density of the positive electrode active material under 3 T is 2.0 g/cm³ or more, and optionally 2.2 g/cm³ or more.

14. A method for preparing a positive electrode active material, comprising the steps of:
(1) a manganese source, a source of an element B and an acid are dissolved and stirred in a solvent to generate a suspension of an element B-doped manganese salt, the suspension is filtered, and the resultant filter cake is dried, to obtain the element B-doped manganese salt;
(2) a lithium source, a phosphorus source, a source of an element A, a source of an element C and a source of an element D, a solvent and the element B-doped manganese salt obtained in step (1) are added into a reaction container, and ground and mixed to obtain a slurry;
(3) the slurry obtained in step (2) is transferred into a spray drying apparatus for spray-drying granulation, to obtain particles;
(4) the particles obtained in step (3) are sintered, to obtain an inner core; and
(5) the inner core obtained in step (4) is coated with a polymer using a dry or wet coating method, to obtain the positive electrode active material, wherein the polymer includes one or more selected from polysiloxanes with a linear structure and polysiloxanes with a ring structure; and
the positive electrode active material has a core-shell structure, which includes an inner core and a shell coating at least part of the inner core, wherein
the inner core has a chemical formula of LiₐAₓMn_{1-y}B_{y}P_{1-z}C_{z}O₄₋ₙDₙ, in which A includes one or more elements selected from Zn, Al, Na, K, Mg, Nb, Mo and W, B includes one or more elements selected from Ti, V, Zr, Fe, Ni, Mg, Co, Ga, Sn, Sb, Nb and Ge, C includes one or more elements selected from B (boron), S, Si and N, and D includes one or more elements selected from S, F, Cl and Br, and a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; the inner core is electrically neutral; and
the coating layer comprises a polymer which comprises one or more selected from polysiloxanes with a linear structure and polysiloxanes with a ring structure.

15. The method according to claim 14, wherein the source of the element A is selected from at least one of the elementary substance, oxide, phosphate, oxalate, carbonate and sulfate of the element A, the source of the element B is selected from at least one of the elementary substance, oxide, phosphate, oxalate, carbonate and sulfate of the element B, the source of the element C is selected from at least one of the sulfate, borate, nitrate and silicate of the element C, and the source of the element D is selected from at least one of the elementary substance and an ammonium salt of the element D.

16. The method according to claim 14 or 15, wherein
the stirring of step (1) is carried out at a temperature in a range of 60°C to 120°C; and/or
the stirring of step (1) is carried out at a stirring speed of 200 to 800 rpm; and/or
the grinding and mixing of step (2) are carried out for 8 to 15 h; and/or
the sintering of step (4) is carried out in a temperature range of 600°C to 900°C for 6 to 14 h.

17. A method according to any one of claims 14 to 16, wherein step (2) also comprises: adding a carbon source into the reaction container for grinding and mixing.

18. A positive electrode plate, comprising a positive electrode current collector and a positive electrode film layer provided on at least one surface of the positive electrode current collector, wherein the positive electrode film layer comprises a positive electrode active material of any one of claims 1 to 13 or a positive electrode active material prepared by a method of any one of claims 14 to 17, and the content of the positive electrode active material in the positive electrode film layer is no less than 10 wt%, and optionally 95 to 99.5 wt%, based on the total weight of the positive electrode film layer.

19. The positive electrode plate according to claim 18, wherein
the solid-liquid contact angle between the positive electrode film layer and a nonaqueous organic solvent lies between 3° and 90°, optionally between 3° and 60°, and further between 10° and 30°; and/or
the positive electrode film layer has a porosity of 15% to 50%, and optionally 20% to 40%.

20. A secondary battery, including a positive electrode active material according to any one of claims 1 to 13 or a positive electrode active material prepared by a method according to any one of claims 14 to 17 or a positive electrode plate according to either of claims 18 to 19.

21. A power consuming device comprising a secondary battery of claim 20.
